# EUROPEAN PATENT SPECIFICATION

(11) **EP 3 551 298 B1**
(45) Date of publication and mention of the grant of the patent: **13.11.2024**
(21) Application number: 16923310.3
(22) Date of filing: 09.12.2016
(51) Int. Cl.: A62C 5/02, B64D 1/16, A62C 3/02, A62C 31/28, B64D 1/22, A62C 5/033

(54) **AERIAL FLUID DELIVERY METHOD AND APPARATUS**
LUFTFLUIDABGABEVERFAHREN UND -VORRICHTUNG
PROCÉDÉ ET APPAREIL DE DISTRIBUTION AÉRIENNE DE FLUIDE

(43) Date of publication of application: 16.10.2019
(73) Proprietor: Hawass, Oubada, Mississauga, Ontario L5K 2R6 (CA)
(72) Inventor: Hawass, Oubada, Mississauga, Ontario L5K 2R6 (CA)
(74) Representative: Sanger, Phillip Simon
(86) International application number: PCT/CA2016/051450
(87) International publication number: WO 2018/102906

(56) References cited:
- EP-A1- 3 117 872
- WO-A1-2015/136128
- WO-A1-91/14477
- FR-A1- 2 761 950
- US-A- 3 428 276
- US-A- 3 442 334
- US-A- 3 604 509
- US-A- 5 699 862
- US-B1- 6 688 402
- US-B1- 9 555 886
- US-B2- 7 225 999
- US-B2- 7 225 999

## Description

### CROSS REFERENCE TO RELATED APPLICATIONS

a) U.S. Provisional Application 61/982,489 filed April 22, 2014 and entitled MULTI-MODULAR AERIAL FIRE FIGHTING APPARATUS,
b) U.S. Provisional Application 62/003,543 filed May 27, 2014 and entitled GRAVITY ASSIST FOAM GENERATOR APPARATUS; and
c) U.S. application 14/692,125, filed April 21, 2015 entitled MULTI-MODULAR AERIAL FIRE FIGHTING CONTROL METHOD AND APPARATUS.

### FIELD

The present disclosure relates generally to methods and devices for aerial delivery of fluids for firefighting and the like.

### BACKGROUND

Weather patterns continue to provide extremely dry conditions throughout the globe, driving a regular need for firefighting capacity. Aerial foam delivery has become more widely used because of the increased efficiencies provided by foam-based retartdants, when compared to more conventional liquid based retardants.

Current aerial fluid delivery systems are also used in agricultural, deicing and other applications, but have limitations. In the case of aircraft, the operable payload is limited by the load weight and by the fluid delivery hardware capability.

In the case of firefighting, the particular method and materials used to fight a fire will depend on the fire class and behaviour, a term used to denote the type of fire, in relation to the combustion materials which have (or could be) ignited. For instance, Class A fires apply to wood, paper, fabric and refuse. Wildfires or wildland fires can be classified according to fuel type, such as brush, bush, grass and forest fire. Firefighters may thus deploy different methods and materials to control fire according to the fire classification and behaviour. For instance, different fire retardants may be selected, such as foam, gel, and water. Generally, in wildfires, both aerial and ground firefighting are deployed, using different fire retardants. Different aerial firefighting methods are used based on delivery systems to transport and drop fire retardant. Frequently, more than one type of aerial firefighting approach is required because of different drop path pattern requirements. Conventional approaches, while effective for their intended applications may not be able to providing a degree of flexibility/adaptability that would otherwise permit more efficient and thus effective use of resources.

FR2761950 D1 (REY) discloses a helicopter (12) for fighting fires, equipped with a foam generating device (4), The foam generating device (4) has a first means arranged in or on the helicopter (12) comprising a main reservoir (1) associated with a pumping and pressurization system, and a proportional member for
delivering the foam concentrate and a second means including two elementary modules arranged on the lateral sides outside the helicopter. Each module (4a, 4b) is fixed either to the skids, or to the cabin, they are arranged under the blades of the helicopter (12), the axis of the module is brought as close as possible in the axis of the rotor in order to avoid possible turbulence and to obtain a better efficiency.

### SUMMARY

The following presents a simplified summary of the general inventive concept herein to provide a basic understanding of some aspects of the invention. This summary is not an extensive overview of the invention. It is not intended to restrict key or critical elements of the invention or to delineate the scope of the invention beyond that defined by the appended claims.

In one aspect, there is provided a modular unit for assembling, in multiples thereof, an aerial emergency fluid delivery boom for use in aerial emergency activities. The modular unit comprises an emergency fluid supply passage segment extending along an alignment path. An emergency fluid delivery plenum is downstream of, and in operative fluid communication with, the emergency fluid supply passage segment, the plenum including an air inlet and an air outlet for delivering emergency fluid under gravity thereto, in a designated operative form according to a corresponding emergency activity. The modular unit is configured for contiguous engagement with at least one other instance of the modular unit to form the aerial emergency fluid delivery boom, with the corresponding emergency fluid supply passage segments aligned along the alignment path and sealingly engaged at adjacent ones of the boundaries to form an assembled emergency fluid supply passage to receive a flow of said emergency fluid from an upstream source and to distribute the emergency fluid to each of the corresponding plenums.

Some exemplary embodiments further comprise a housing, the emergency fluid supply passage segment extending laterally across the housing with the open ends formed on opposite boundaries thereof.

In some exemplary embodiments, the plenum has a longitudinal axis transverse to the emergency fluid supply passage segment.

Some exemplary embodiments further comprise a reservoir configured to be in operative fluid communication with the emergency fluid supply passage segment for receiving emergency fluid therefrom and to deliver the emergency fluid to the plenum.

Some exemplary embodiments further comprise a pressurizing portion operatively associated with the inlet for pressuring the air flow through the plenum.

In some exemplary embodiments, the pressurizing portion is active.

In some exemplary embodiments, the pressurizing portion is passive.

Some exemplary embodiments provide an aerial firefighting distributor apparatus which includes modular units held together to form the new aerial firefighting system and these modular units can work together or independently. The system comprises one or more one modular unit, including one or more of a fluid conduit, a reservoir, air flow generator, a support structure, an aerial suspension system and an aerial lift system.

In another aspect, there is provided a modular foam generator for assembling, in multiples of at least one, an aerial foam delivery array to be suspended from an aerial vertical lift, comprising at least one supply fluid inlet in operative fluid communication directly or indirectly with a fluid source to receive supply fluid therefrom, a foam outlet configured to deliver foam therefrom to a target activity site, wherein the modular foam generator is configured for assembly with at least one other instance thereof to form the aerial foam delivery array.

Some exemplary embodiments may further comprise a supply fluid passage segment in fluid communication with the supply fluid inlet and configured to be contiguously assembled with corresponding supply fluid passage segments of adjacent instances of the modular foam generator in the array, to form a supply fluid pipeline configured to distribute the supply fluid to the modular foam generators in the array.

Some exemplary embodiments may further comprise a plenum downstream of, and in operative fluid communication with, the supply fluid passage segment to receive supply fluid therefrom substantially by gravity, the plenum having first and second opposite boundaries along a central plenum axis, an air inlet adjacent the first boundary and which is open to atmosphere to receive an air flow therethrough, and a foam outlet at the second boundary for delivering foam therethrough to fall under gravity therefrom.

In some exemplary embodiments, the air inlet and/or the foam outlet may be symmetrically arranged relative to the plenum axis.

In some exemplary embodiments, the supply fluid passage segment may extend transversely relative to the plenum central axis, and include opposite boundaries for fluid coupling with corresponding boundaries of adjacent supply fluid passage segments in the array.

In some exemplary embodiments, the plenum may include:
a. a first air inlet zone including the air inlet and configured to generate the air flow at a first designated volume flow rate;
b. a second supply fluid flood distribution zone downstream of the first air inlet zone and configured to receive the supply fluid from the corresponding supply fluid passage segment substantially by gravity and configured to form a distributed flood of fluid at a second designated flow rate; and
c. a third foam forming zone downstream of the second supply fluid flood distribution zone, and configured to receive the air flow at the first designated volume flow rate and the distributed flood of supply fluid at the second designated volume flow rate, to generate foam at an expansion rate according to the first and second volume rates.

In some exemplary embodiments, the second supply fluid distribution zone may include an array of at least one or more distributors extending laterally across the plenum, to distribute the supply fluid across the plenum from a plurality of points spaced along a plurality of radial distribution paths.

In some exemplary embodiments, the distributors may include a plurality of perforated pipe members, each with an elongate cross section having a major axis substantially aligned with the plenum axis.

Some exemplary embodiments may further comprise a reservoir configured to be in operative fluid communication with the supply fluid passage segment for receiving the supply fluid therefrom and to deliver the supply fluid to the plenum.

In some exemplary embodiments, the reservoir may surround the plenum, at least in part, and the perforated pipe members are in fluid communication with the reservoir at a plurality of locations spaced circumferentially around the plenum.

Some exemplary embodiments may further comprise a pressurizing portion operatively associated with the air inlet for pressuring the air flow through the plenum.

In some exemplary embodiments, the pressurizing portion may be active and may include a motorized fan.

In some exemplary embodiments, the pressurizing portion may be passive.

In some exemplary embodiments, the plenum may be configured to draw air flow into the air inlet from a leading region of the modular foam generator relative to a travel path thereof during deployment.

In some exemplary embodiments, the plenum axis may be aligned with the travel path.

Some exemplary embodiments may further comprise one or more air guides to direct air into the air inlet.

In another aspect, there is provided a plurality of modular foam generators as defined in any one of the aspects or exemplary embodiments herein.

Some exemplary embodiments may further comprise an aerial foam delivery array support to support the plurality of modular foam generators.

Some exemplary embodiments may further comprise at least one valve portion to control supply fluid flow to the distributors.

In some exemplary embodiments, the plenum may have a boundary surface with a plurality of first openings, each in fluid communication with a corresponding distributor inlet, and wherein the valve portion includes a valve ring portion which is concentrically arranged with the boundary surface and provided with a plurality of second openings, each to align with a corresponding first opening in an open position, and a valve actuator for actuating the valve ring portion between open and closed positions.

In some exemplary embodiments, the valve actuator may include a motorized transmission to move the valve ring portion relative to the boundary surface.

In some exemplary embodiments, the valve ring portion may support a plurality of sealing portions, each configured to align with a corresponding first opening to operatively seal the first opening when the valve ring portion is in the closed positon.

In another aspect, there is provided a foam generator for use in aerial foam delivery activities, comprising a plenum including an air inlet open to atmosphere to receive a flow of air and a foam outlet, the plenum configured to be downstream of, and in operative fluid communication directly or indirectly with, a supply fluid source to receive a supply fluid therefrom substantially by gravity, the plenum configured to mix the supply fluid and the flow of air to generate foam at, upstream and/or at the foam outlet, for delivery to a designated target area substantially by gravity, and a suspension structure for suspending the foam generator from an aerial vertical lift.

In another aspect, there is provided a support lift system for use with an aircraft for lifting and supporting an array of one or more modular foam generators for use in aerial foam delivery activities, comprising a support structure configured with a plurality of designated mounting zones, each to receive one or more of a corresponding plurality of modular foam generators, along the support structure to configure the array of modular foam generators for the aerial foam delivery activities.

In some exemplary embodiments, the support structure may include at least two spars extending laterally from a central portion, where each designated mounting zone may include a corresponding location on each of the spars, each of the modular foam generators may include a modular mounting portion with a corresponding pair of formations to engage each of the spars at any one of the mounting zones.

Some exemplary embodiments may further comprise at least one anchor member for removably anchoring the modular mounting portion at the corresponding designated mounting zone.

In some exemplary embodiments, the anchor member may include a locking member mountable to a corresponding spar or to the modular mounting portion.

In another aspect, there is provided a support lift system as defined in any one of the aspects or exemplary embodiments herein, further comprising a reeling mechanism to raise and lower the support structure relative to the aircraft.

In another aspect, there is provided support lift system as defined in any one of the aspects or exemplary embodiments herein, further comprising one or more thrusters mounted on the support structure, to steer the array relative to the aircraft.

In another aspect, there is provided a modular foam generator array assembly, comprising the support lift system and an array of at least one modular foam generators mounted at one of the designated mounting zones, as defined in any one of the aspects or exemplary embodiments herein.

Some exemplary embodiments may further comprise one or more thrusters to steer the array relative to the aircraft.

In another aspect, there is provided a foam generating device to be suspended from an aerial vertical lift for use in aerial foam delivery, comprising a plenum, the plenum comprising:
i. a first air inlet zone open to atmosphere and configured to generate a positive pressure air flow at a first designated volume flow rate;
ii. a second supply fluid flood distribution zone therefrom substantially by gravity in communication directly or indirectly with a supply fluid source to receive supply fluid substantially by gravity therefrom and downstream of the first zone; the second zone configured to form a distributed flood of supply fluid at a second designated flow rate; and
iii. a third foam forming zone, the third zone configured to receive the air flow of the first designated volume flow rate and the distributed flood of supply fluid of the second designated volume flow rate; to generate foam at an expansion rate according to the first and second volume flow rates.

In another aspect, there is provided a foam generating device to be suspended from an aerial lift for use in aerial foam delivery, comprising a plenum, the plenum comprising:
i. a first air inlet zone open to atmosphere and configured to generate an air flow at a first designated volume flow rate;
ii. a second supply fluid distribution zone downstream of the first air inlet zone, the second zone being in communication directly or indirectly with a supply fluid source to receive supply fluid therefrom substantially by gravity, the second supply fluid distribution zone being configured to provide a plurality of distributed streams of supply fluid laterally across the plenum collectively at a second designated flow rate; and
iii. a third foam-forming zone downstream of the second zone, the third foam-forming zone configured to receive the air flow of the first designated volume flow rate and the distributed streams of fluid at the second designated volume flow rate to generate foam at an expansion rate according to the first and second volume rates.

In another aspect, there is provided a modular foam generator for assembling, in multiples of at least one, an aerial foam delivery array, the modular foam generator comprising a supply fluid passage segment, configured to be contiguously assembled with supply fluid passage segments of adjacent instances of the modular foam generator, to form the array to be suspended from an aerial lift, wherein the supply fluid passage segment is in fluid communication with adjacent supply fluid passage segments to form a supply fluid passage pipeline to distribute fluids from a supply fluid source to each modular foam generator along the array passing the fluid through the supply fluid segments from one foam generator to another.

In another aspect, there is provided a method of forming foam for use in aerial foam delivery from an aerial vertical lift, comprising:
a. providing an array of at least one plenum, each with opposite ends providing an air inlet zone that is open to atmosphere and a foam outlet zone respectively, the foam outlet zone including a mesh screen arranged to receive foam-forming supply fluid and a flow of air;
b. establishing the flow of air through the plenum;
c. supplying the plenum with foam-forming fluid substantially under gravity;
d. distributing, substantially by gravity, a plurality of streams of the foam-forming supply fluid laterally across a distribution zone in the plenum between the air inlet zone and the foam outlet zone, wherein the streams of foam-forming supply fluid pass through the plenum with the air flow to the foam outlet zone to intermingle with the mesh screen to form foam, for delivery by gravity to a target area.

In some exemplary embodiments, the distributing may include providing a series of perforated linear fluid distributors extending laterally across the plenum, and delivering the foam-forming supply fluid to the fluid distributors to form the streams therefrom.

In some exemplary embodiments, the array may include a plurality of plenums, with each plenum being in fluid communication directly or indirectly with a corresponding foam-forming fluid supply passage segment associated therewith, further comprising distributing the foam-forming supply fluid from one passage segment to another next along the array substantially by gravity, to deliver the foam-forming supply fluid to each plenum location

In another aspect, there is provided a modular foam generator, comprising a supply fluid passage segment and configured to be contiguously assembled in multiples of at least one, to form an array of foam generators to be suspended from an aircraft, wherein the supply fluid segment is in fluid communication with adjacent supply fluid passage segments to form a supply fluid passage pipeline to proportionally distribute fluids from a fluid supply source to each foam generator along the array.

In another aspect, there is provided a foam generating system, comprising an array of one or more modular foam generators as defined in any one of the aspects or exemplary embodiments herein.

In another aspect, there is provided a support structure for supporting an array of one or more modular foam generators as defined in any one of the aspects or exemplary embodiments herein, comprising at least one mounting region defining an array path with a plurality of modular foam generator mounting zones provided thereon, each to receive any one of the one or more modular foam generators, each with a common securing configuration to a engage any one of the corresponding mounting zones.

In another aspect, there is provided a modular foam generator for use in aerial foam delivery activities, comprising a plenum including an air inlet to receive a flow of air and a foam outlet, the plenum configured to be downstream of, and in operative fluid communication directly or indirectly with, a supply fluid source to receive a supply fluid therefrom substantially by gravity, so as to generate foam at, or upstream of, the foam outlet, for delivery to a target site substantially by gravity, and a suspension structure for suspending the foam generator from an aircraft.

In another aspect, there is provided a modular foam generator for use in aerial foam delivery activities, comprising a plenum including an air inlet to receive a flow of air and a foam outlet, a supply fluid passage segment to be in fluid communication directly or indirectly with a supply fluid source, the plenum configured to be downstream of, and in operative fluid communication directly or indirectly with, the supply fluid passage segment to receive a supply fluid therefrom substantially by gravity, so as to generate foam at, or upstream of, the foam outlet, for delivery to a target site substantially by gravity, and a suspension structure for suspending the modular foam generator from an aircraft.

In another aspect, there is provided a support structure for supporting an array of one or more modular foam generators as defined in any one of the aspects or exemplary embodiments herein, comprising at least one mounting region defining an array path with a plurality of modular foam generator mounting zones provided thereon, each to receive any one of the one or more modular foam generators, each with a common securing configuration to engage any one of the corresponding mounting zones.

In another aspect, there is provided a lift system for use with a helicopter for lifting a foam generator array, comprising a support structure configured with a plurality of common foam generator mounting zones, each to receive any one of a corresponding plurality of foam generators, along the support structure to balance the support structure for an operational lift activity.

In another aspect, there is provided a foam generating device for use in aerial foam delivery, comprising:
a. a reservoir to be in communication with a supply fluid source;
b. a plenum defining:
   i. a first air inlet zone configured to generate an air flow at a first designated volume flow rate;
   ii. a second supply fluid flood distribution zone in communication directly or indirectly with the reservoir and downstream of the first zone, the second zone configured to form a distributed flood of fluid droplets at a second designated flow rate; and
   iii. a third foam fluid transition zone downstream of the second zone, the third zone configured to receive the air flow of the first designated volume flow rate and the distributed fluid droplets of the second designated volume flow rate to generate foam at an expansion rate according to the first and second volume rates.

In another aspect, there is provided a modular foam generator for assembling, in multiples of at least one, an aerial foam delivery array to be suspended from an aircraft, comprising:
i. a supply fluid passage segment; and
ii. a foam generator downstream of, and in operative fluid communication with, the supply fluid passage segment to receive fluid therefrom substantially under gravity, the foam generator comprising a foam outlet and configured to deliver foam therethrough to fall under gravity to a target activity site;
wherein, the modular foam generator is configured for contiguous engagement with at least one other instance thereof to form the aerial foam delivery array, with the corresponding supply fluid passage segments fluidly connected to form an assembled supply fluid passage to receive a flow of the supply fluid from an upstream source and to distribute the fluid to each of the corresponding foam generators.

In another aspect, there is provided a method for aerial firefighting, comprising:
a. providing an array of one or more foam generators suspended from an aerial vertical lift; a reeling mechanism for elevational control of the array relative to the vertical lift, and one or more thrusters for directional control relative to the vertical lift;
b. activating the array to begin production of foam; and
c. activating control of the reeling mechanism and/or the thrusters through a succession of designated actions to operationally orient the array in relation to the vertical lift and a target delivery location to deliver foam thereto.

In another aspect, there is provided a support lift system for use with an aircraft for lifting and supporting an array of one or more modular units for use in aerial transport, comprising a support structure configured with a plurality of designated mounting zones, each to receive one or more of a corresponding plurality of modular units, along the support structure to configure the array of modular units for the aerial transport, and a reeling mechanism for controllably adjusting the position of the array relative to the aircraft.

In another aspect, there is provided a modular unit for assembling, in multiples thereof, an aerial emergency fluid delivery array for use in aerial emergency activities, comprising an emergency fluid supply passage segment extending along an alignment path; and an emergency fluid delivery plenum downstream of, and in operative fluid communication with, the emergency fluid supply passage segment to receive emergency fluid therefrom substantially under gravity force, the plenum including an air inlet open to atmosphere to receive an air flow and an emergency fluid outlet open to atmosphere for delivering emergency fluid , to fall under gravity therefrom in a designated operative form according to a corresponding emergency activity; wherein, the modular unit is configured for contiguous engagement with at least one other instance of the modular unit to form the aerial emergency fluid delivery array, with the corresponding emergency fluid supply passage segments aligned and sealingly engaged along the alignment path to form an assembled emergency fluid supply passage to receive a flow of the emergency fluid from an upstream source and to distribute the emergency fluid to each of the corresponding plenums.

Some exemplary embodiments may further comprise a housing, the emergency fluid supply passage segment extending laterally across the housing and including opposite open first ends formed on opposite first boundaries of the housing.

In some exemplary embodiments, the plenum may have a longitudinal axis that is transverse to the alignment path, and the air inlet and emergency fluid outlet are defined by open second ends on opposite second boundaries of the housing.

Some exemplary embodiments may further comprise a reservoir configured to be in operative fluid communication with the emergency fluid supply passage segment for receiving the emergency fluid therefrom and to deliver the emergency fluid to the plenum.

In some exemplary embodiments, the opposite second boundaries are defined, at least in part, on corresponding leading and trailing sections of the housing, or on corresponding upper and lower sections of the housing.

Some exemplary embodiments may further comprise a pressurizing portion operatively associated with the air inlet for pressuring the air flow through the plenum.

In some exemplary embodiments, the pressuring portion may include a motorized propeller positioned adjacent the air inlet.

Some exemplary embodiments may further comprise a valve assembly to control a fluid flow rate of the emergency fluid to the plenum.

In some exemplary embodiments, the emergency fluid outlet may include at least one mesh screen section to receive the emergency fluid there through, and which is configured to cause the emergency fluid to transition to a foam consistency.

In another aspect, there is provided an aerial emergency fluid delivery array assembly, comprising a plurality of modular units as defined in any one of the aspects or exemplary embodiments herein.

Some exemplary embodiments may further comprise an aerial emergency fluid delivery array support to receive the plurality of modular units in side by side relation along the support and removably secured thereto.

Some exemplary embodiments may further comprise at least one tank configured to be in fluid communication with the emergency fluid supply passage segment of at least one modular unit.

Some exemplary embodiments may further comprise a hub configured to be in fluid communication between the emergency fluid passage segment of the at least one modular unit and the tank.

In another aspect, there is provided an aerial fluid delivery system, comprising a plurality of modular fluid delivery units, each configured to be assembled in a designated one of a number of modular configuration arrangements for operative suspension beneath a vertical lift according to one or more designated factors, the plurality of fluid delivery units organized into groups of fluid delivery units including:
a. a first group of one or more fluid delivery units operable to receive, or to contain a first designated fluid and responsive to a first control function for delivering the first designated fluid or a derivative thereof; and
b. a second group of one or more fluid delivery units operable to receive, or to contain a second designated fluid and responsive to a second control function for delivering the second designated fluid or a derivative thereof.

In some exemplary embodiments, the first and second designated fluids may be the same.

In some exemplary embodiments, the first and second designated fluids may be foams and/or liquids, with corresponding first and second forms, constituents, ingredients and/or flow rates.

In some exemplary embodiments, the first designated fluid may be a foam and the second designated fluid may be water.

In some exemplary embodiments, the modular configuration arrangement may include one or more of a I-, II-, III-, H H-, U-, V-, C- ,X-, and O- shaped configuration arrangement in one or rows or levels in one or more dimensions, relative to the vertical lift.

In another aspect, there is provided a method for preparing an aerial fluid delivery, comprising:
a. providing a plurality of modular fluid delivery units, each configurable to be assembled in one of a number of modular configuration arrangements for operative suspension beneath a vertical lift;
b. assembling the plurality of modular fluid delivery units into a designated modular configuration arrangement;
c. designating:
   i. a first group of one or more fluid delivery units operable to receive, or to contain a first designated fluid; and
   ii. a second group of one or more fluid delivery units operable to receive, or to contain a second designated fluid;
d. configuring each of the fluid delivery units in the first and second groups to be responsive to respective first and second control functions to deliver the respective first and second fluids or derivatives thereof.

In another aspect, there is provided an aerial fluid delivery system, comprising a plurality of modular fluid delivery units, each configured to be assembled in a designated one of a number of modular configuration arrangements for operative suspension beneath a vertical lift according to one or more designated factors, the plurality of fluid delivery units organized into one or more groups of fluid delivery units, each group including one or more of the fluid delivery units, each group operable in a designated configuration arrangement to receive, or to contain a designated fluid and responsive to a control function for delivering the designated fluid or a derivative thereof.

In some exemplary embodiments, the designated fluids may be the same for the one or more groups. In some exemplary embodiments, the designated fluids for each of the one or more groups includes one or more designated foams and/or liquids, with corresponding forms, constituents, ingredients and/or flow rates.

In some exemplary embodiments, the designated fluid of one group is may be foam and the designated fluid of another group may be water.

In some exemplary embodiments, the modular configuration arrangements may include one or more of a I-, II-, III-, H-, U-, V-, C- ,X-, and O- shaped configuration arrangement in one or rows or levels in one or more dimensions, relative to the vertical lift.

In another aspect, there is provided a method for preparing an aerial fluid delivery , comprising:
a. providing a plurality of modular fluid delivery units, each configurable to be assembled in one of a number of modular configuration arrangements for operative suspension beneath a vertical lift;
b. designating:
   i. a first one or more groups of one or more fluid delivery units operable to receive, or to contain a first designated fluid; and
   ii. a second one or more groups of one or more fluid delivery units operable to receive, or to contain a second designated fluid;
c. configuring each of the fluid delivery units in the first and second groups in designated configuration arrangements to the respective first and second fluids or derivatives thereof in desired drop path pattern; and
d. assembling the plurality of modular fluid delivery units into the designated modular configuration arrangement.

In another aspect, there is provided a method of aerial firefighting using an array of foam generators suspended from an aerial vertical lift, comprising:
a. arranging the array in a selected one of a number of delivery path configurations;
b. suspending the array from an aerial vertical lift with a reeling mechanism and/or at least one thruster to orient the array;
c. supplying each of the foam generators with a foam solution;
d. activating the reeling mechanism/or and at least one thruster, while activating one or more of the foam generators in the array to deliver foam to a designated target.

In another aspect, there is provided a method of aerial firefighting using an array of foam generators suspended from an aerial vertical lift, comprising:
a. providing a plurality of modular fluid delivery units, each configurable to be assembled in one of a number of modular configuration arrangements for operative suspension beneath a vertical lift;
b. designating one or more groups of one or more fluid delivery units operable to receive, or to contain a designated fluid; and
c. configuring each of the fluid delivery unit groups in a designated configuration arrangement according to a desired drop path pattern.
d. assembling the plurality of modular fluid delivery units into the designated modular configuration arrangement;
e. suspending the array from an aerial vertical lift with a reeling mechanism and/or at least one thruster to orient the array;
f. supplying each of the foam generators with a corresponding designated fluid or a derivative therefrom;
g. activating a reeling mechanism/or and at least one thruster, while activating one or more of the foam generators in the array to deliver one or more of the designated fluids, or derivatives therefrom, to a designated target.

In another aspect, there is provided a method for preparing an aerial fluid delivery, comprising:
a. providing a plurality of modular fluid delivery units, each configurable to be assembled in one of a number of modular configuration arrangements for operative suspension beneath a vertical lift;
b. designating one or more groups of one or more fluid delivery units operable to receive, or to contain a designated fluid;
c. configuring each of the fluid delivery unit groups in certain configuration arrangement shape thereof in desired drop path pattern; and
d. assembling the plurality of modular fluid delivery units into the designated modular configuration arrangement.

In another aspect, there is provided a foam generating device to be suspended from an aerial lift for use in aerial foam delivery, comprising a plenum, the plenum comprising:
i. a first air inlet zone open to atmosphere and configured to generate an air flow at a first designated volume flow rate;
ii. a second supply fluid distribution zone downstream of the first air inlet zone, the second zone being in communication directly or indirectly with a supply fluid source to receive supply fluid therefrom substantially by gravity, the second supply fluid distribution zone being configured to provide a plurality of distributed streams of supply fluid laterally across the plenum collectively at a second designated flow rate using perforated airfoil shaped pipes; and
iii. a third foam-forming zone downstream of the second zone, the third foam-forming zone configured to receive the air flow of the first designated volume flow rate and the distributed streams of fluid at the second designated volume flow rate to generate foam at an expansion rate according to the first and second volume rates.

In another aspect, there is provided a method, device and/or system as shown and described herein.

In another aspect, there is provided a foam generator array for use in aerial foam delivery activities, comprising an array of plenums, each including an air inlet open to atmosphere to receive a flow of air and a foam outlet, the plenum configured to be downstream of, and in operative fluid communication directly or indirectly with, a supply fluid source to receive a supply fluid therefrom substantially by gravity, the plenum configured to mix the supply fluid and the flow of air to generate foam at, upstream and/or at the foam outlet, for delivery to a designated target area substantially by gravity, and a support structure for supporting the array, the support structure including one or more supply fluid segments in fluid communication with the supply fluid source.

In some exemplary embodiments, the supply fluid source may include at least one reservoir centrally located on the support structure, and one or more of channels extending between the reservoir and the supply fluid segments.

In some exemplary embodiments, the supply fluid segments may be configured to receive one or more of the array of plenums therein.

In some exemplary embodiments, the plenum and the supply fluid segments may have generally aligned side walls spaced from one another to contain the supply fluid therebetween.

In some exemplary embodiments, the plenum and supply fluid segments may be configured so that the supply fluid in the supply fluid segment surrounds the side wall of the plenum.

In some exemplary embodiments, the support structure may be configured to provide a pair of opposed lateral support structures to support a corresponding pair of opposed lateral supply segments, each with a plurality of plenums therein, and a central support structure.

In some exemplary embodiments, the opposed lateral support structures may be transferable between operable and inoperable positions relative to the central support structure.

In some exemplary embodiments, each lateral supply segment may be in fluid communication with the reservoir at least when the opposed lateral support structure is in the operable position.

Some exemplary embodiments may further comprise a fluid transfer coupling between each of the lateral supply segments and the reservoir, wherein the coupling is engaged at least when the lateral supply segments are in the operative position

In some exemplary embodiments, the coupling may disengage when the lateral supply segments are in the inoperative position

In some exemplary embodiments, the coupling may include pair of fluid passages, each in communication with the corresponding lateral supply segment and the reservoir, wherein the passages fluid passages are configured to be decoupled when the lateral supply segments are in the inoperative position.

In some exemplary embodiments, the foam outlet may be movable relative to the at least one supply fluid inlet to adjust one or more characteristics of the form delivered therethrough.

In some exemplary embodiments, for example for one or more modular foam generators defined in any one of the aspects or exemplary embodiments herein, the foam outlet may be movable relative to the at least one supply fluid inlet to adjust one or more characteristics of the form delivered therethrough.

It is to be understood that the invention is not limited in its application to the details of construction or to the arrangements of the components set forth in the following description or illustrated in the drawings. The invention is capable of other embodiments and of being practiced and carried out in various ways. Also, it is to be understood that the phraseology and terminology employed herein are for the purpose of the description and should not be regarded as limiting. The use of "including," "comprising," or "having" and variations thereof herein is meant to encompass the items listed thereafter and equivalents thereof as well as additional items Unless limited otherwise, the terms "connected," "coupled," and "mounted," and variations thereof herein are used broadly and encompass direct and indirect connections, couplings, and mountings. In addition, the terms "connected" and "coupled" and variations thereof are not restricted to physical, mechanical or electrical connections or couplings. Furthermore, and as described in subsequent paragraphs, the specific mechanical and/or other configurations illustrated in the drawings are intended to exemplify embodiments of the invention. However, other alternative mechanical and/or electrical or other configurations are possible which are considered to be within the scope of the claims.

Thus, exemplary embodiments may provide a modular aerial firefighting control method and apparatus for providing a firefighter alternative and/or improved methods to control fire, and/or provide a firefighter more safe and easy methods to control fire, and/or to provide a firefighter with other methods and/or devices to control fire, or for other applications as discussed herein.

Thus, exemplary embodiments may also provide is to provide a modular Aerial firefighting control method and system that is configured to distribute chemicals or fluids for agriculture, oil containment, de-icing, or weather control purposes.

### BRIEF DESCRIPTION OF THE DRAWINGS

Various other objects, features and attendant advantages will become fully appreciated as the same becomes better understood when considered in conjunction with the accompanying drawings, in which like reference characters designate the same or similar parts throughout the several views, and wherein:
Fig 1 is an upper perspective view of one or more exemplary aerial fluid delivery systems;
Figs 2 to 6 are front, side, rear, top and bottom views of the systems of fig 1;
Fig 6a is an operational schematic plan view of the systems of figure 1;
Fig 6b show operational schematic plan views of alternative configurations;
Figs 7 to 15 are fragmentary, perspective views of one or more portions of the systems of fig 1;
Figs 16 and 17 are fragmentary perspective views of one or more portions of one or more other exemplary aerial fluid delivery systems;
Figs 18 to 25 are fragmentary perspective, side, top plan, sectional and perspective sectional views of one or more portions of one or more other exemplary aerial fluid delivery systems;
Fig 25a is a sectional schematic view of another exemplary aerial fluid delivery system;
Figs 26 to 28 are perspective views of one or more portions of one or more other exemplary aerial fluid delivery systems;
Figs 29 to 31 are perspective and sectional views of one or more portions of one or more other exemplary aerial fluid delivery systems;
Figs 32 and 33 are side and perspective views of one or more portions of one or more other exemplary aerial fluid delivery systems;
Figs 34 and 35 are perspective and side views of one or more portions of one or more other exemplary aerial fluid delivery systems; and
Figs 36 to 38 are side, perspective and sectional views of one or more portions of one or more other exemplary aerial fluid delivery systems; and
Figs 39 to 47 are perspective, plan and/or sectional views of another exemplary aerial fluid delivery system, and shown in two configurations.

### DETAILED DESCRIPTION

Turning now to the drawings, in which similar reference characters denote similar elements throughout the several views, the figures illustrate, in some exemplary embodiments, one or more modular units held together to form the new aerial firefighting system, which may include one or more of one or more fluid conduits, reservoirs or other fluid sources or accesses thereto, air flow generators, support structures, as well as aerial suspension and lift structures.

Exemplary embodiments herein are configured for the delivery of fluids, which may include emergency fluids, which may include retardants and the like, or functional fluids which are configured for a particular function, such as agricultural, irrigation, deciding, oil containment, climate control, and/or other fields, in some cases as a liquid, a mist and/or a foam. Specific formulations of such fluids are not discussed herein, but will be understood by those skilled in the art.

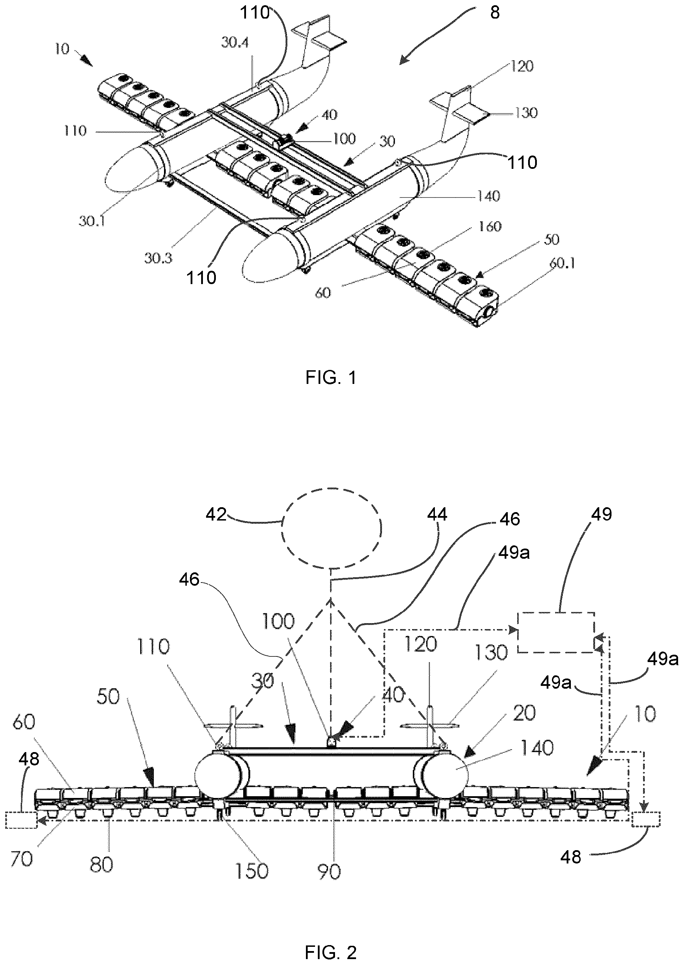

Fig 1 shows a perspective view of an exemplary embodiment of an aerial firefighting system 8, comprising an upper level providing a fluid supply in the form of a reservoir tank 140 for a lower level where the fluid may flow to an array 10 of modular units 50, it being understood that other example embodiments may deploy fluid supplies which are not necessarily above the modular units 50. In the example of Fig 1, the fluid may flow from the upper level to lower level by gravity, and/or via a pump or other fluid pressure devices may be provided to increase the fluid pressure/flow from the upper level 140 to the lower level 10.

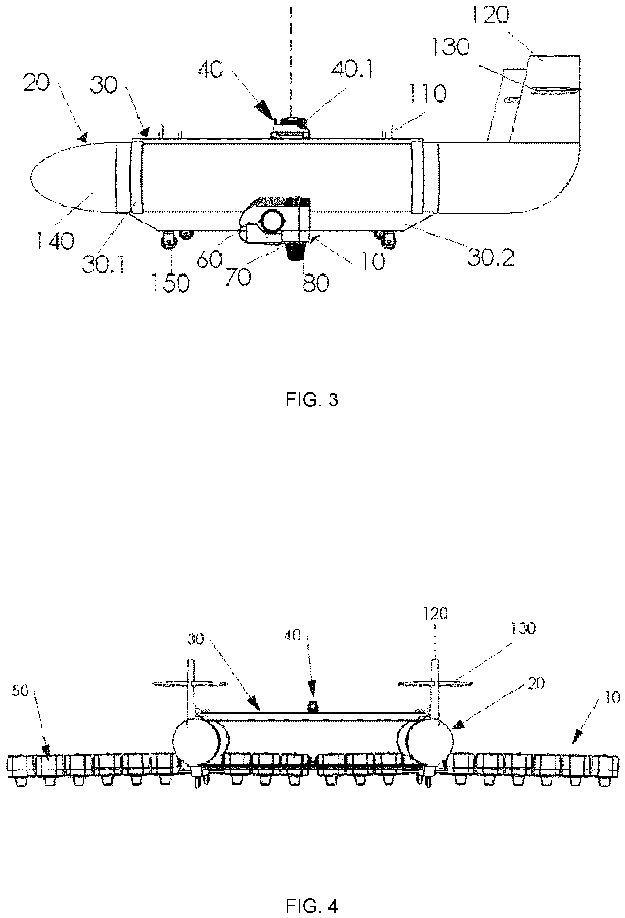

In some exemplary embodiments, as shown in Fig 1 and Fig 2, the system may be provided with a suspension assembly as shown at 40, and may be suspended by a lift system like a helicopter shown schematically at 42, though other aerial lift systems are also contemplated, such as aircraft including lighter than air craft, planes, and the like. One end of a cable 44 may be attached to the helicopter 42 and the other end of the cable 44 attached the suspension assembly 40. A reeling mechanism or winch assembly 40.1 shown in Fig 3 may also be installed to allow the system to be reeled up or down on the cable 44 in relation to the helicopter 42, to enable the position of the system 8 to be adjustable relative to a fire location or other target site, in some cases to increase the load drop accuracy. Reeling the system 8 back to an upper position near the helicopter 41, or other support aircraft may, in some cases, enable the system 8 to be carried with less drag and improved aerodynamic stability between a home base location and the fire location, for instance In some exemplary embodiments, a number of hooks, such as four hooks 110 may be provided to engage a corresponding number of cables 46 in a support harness, placed on the system 8 to make the system 8 more aerodynamically stable and/or provide greater directional control of the system by the helicopter 42. For instance, the system 8 may be further provided with one or more thrusters or other directional control motors such as motorized fans or the like, as shown schematically at 48 in Fig 2 which, together with the reeling mechanism 40.1 may be controlled by way of a controller 49 via one or more wired or wireless communication paths 49a. In some exemplary embodiments, the wireless communication paths may be provided by wireless signal transmitters, receivers and/or transceivers in local actuators at the thrusters 48 and reeling mechanism 40.1.

In some exemplary embodiments, the reeling mechanism assembly may be placed in the middle of the two reservoirs and in the middle of the apparatus structure for better balance. The reeling winch may be placed in the centre to reel the structure apparatus up and down in reference to the aerial lift system.

In some exemplary embodiments, as shown in Figs 1 to 3, the suspension and reeling assembly 40 may be configured to lift and suspend the system 8, by way of the cable 44 between it and the helicopter 42. The reeling mechanism 40.1 may be deployed to reel the system 8 up and down relative to the helicopter 42. Thus, the cables 44, 46 may be integrated into a harness which may also include supply hoses, pipes or the like to provide supply fluid in cases where the reservoir is not located on the system 8.

In some exemplary embodiments, the system 8 may be configured to direct fluid to the array 10 from a fluid supply or source below the modular units 50, such as by means of a pump, or the like. The modular units 50, as will be described, may be configured to deliver the fluid to the fire location, or to use the fluid in the production of a firefighting agent in a different form, as described below.

In some exemplary embodiments, the tank 140 may be fitted with a refilling opening or suction hose to allow the tank 140 to be refilled with the fluid. The fluid, in some examples, may be water. The tank 140 may be fitted with one or more internal compartments to hold and/or mix a foam chemical solution or the like with water to form emergency fluids, or fluids for other uses as will be described below. In other cases, the water itself may form the emergency fluid.

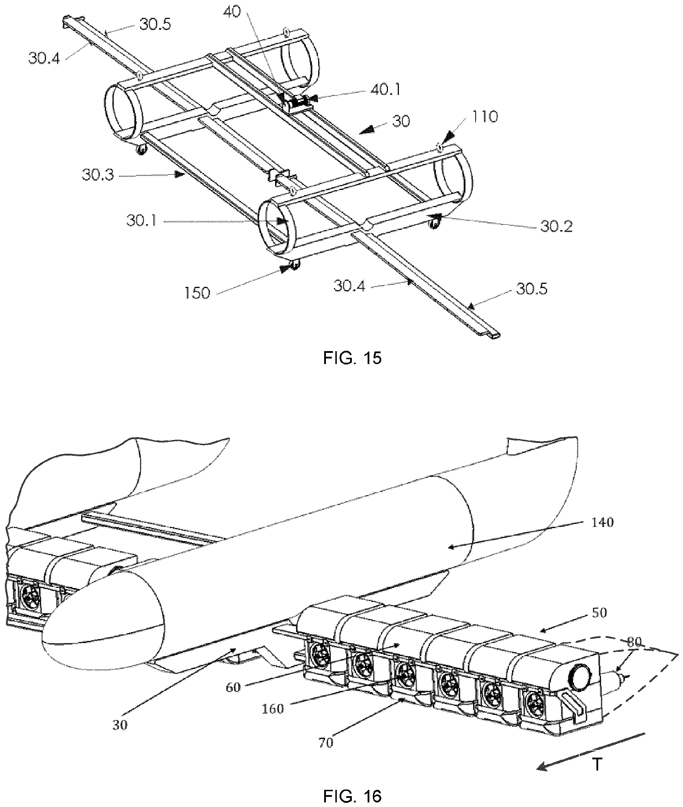

Figs 2 and 15 show, in some exemplary embodiments, that the tank 140, or upper level fluid supply and the lower level modular units 50 may be held together by a support structure 30, where the tank 140 is secured by one or more framework structures or bracket beams 30.2, clamps or tank support rings 301 and joints or tank support beams 30.3. In this case, the modular units 50 are mounted on the beams or spars 30.4 and 30.5 that are attached to the main support structure 30 at the bracket beams 30.2. Other configurations may also be used to support both the tank 140 and the/or the array 10.

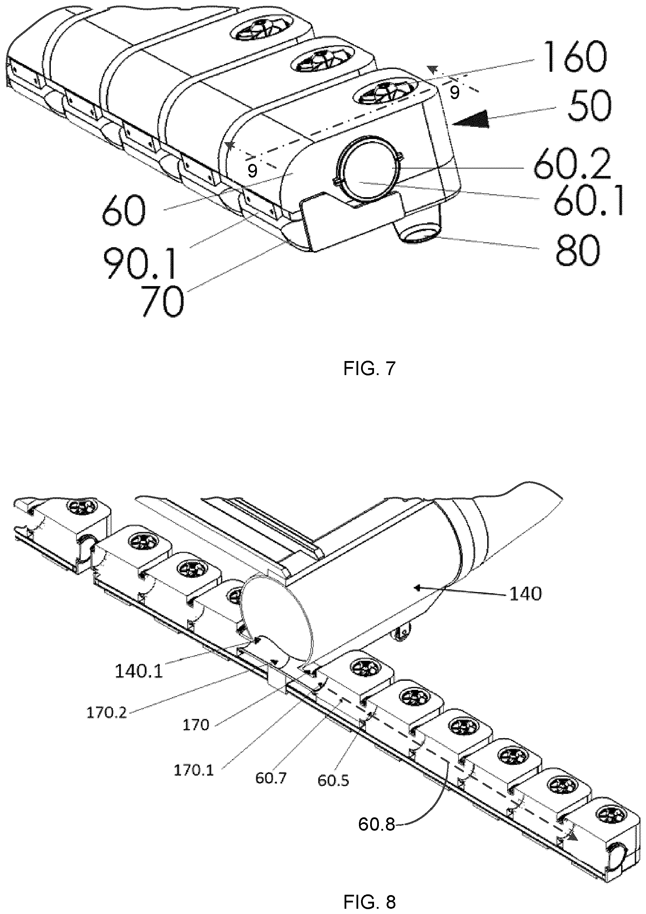

Referring to Fig 8, the tank 140 has an opening or a valve placed in a lower region thereof, as shown at 140.1, to allow the fluid release to the neighbouring modular unit reservoir and conduit housing 60.7, as is described below. Thus, in this example, the fluid may flow under gravity force from the upper level (that is from the tank 140) to the lower level (that is to the modular units 10).

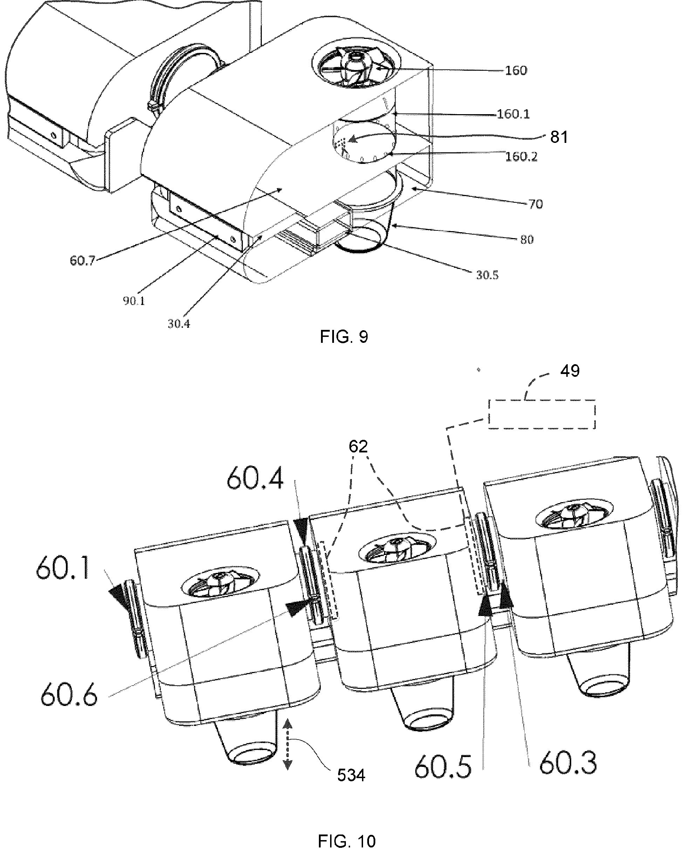

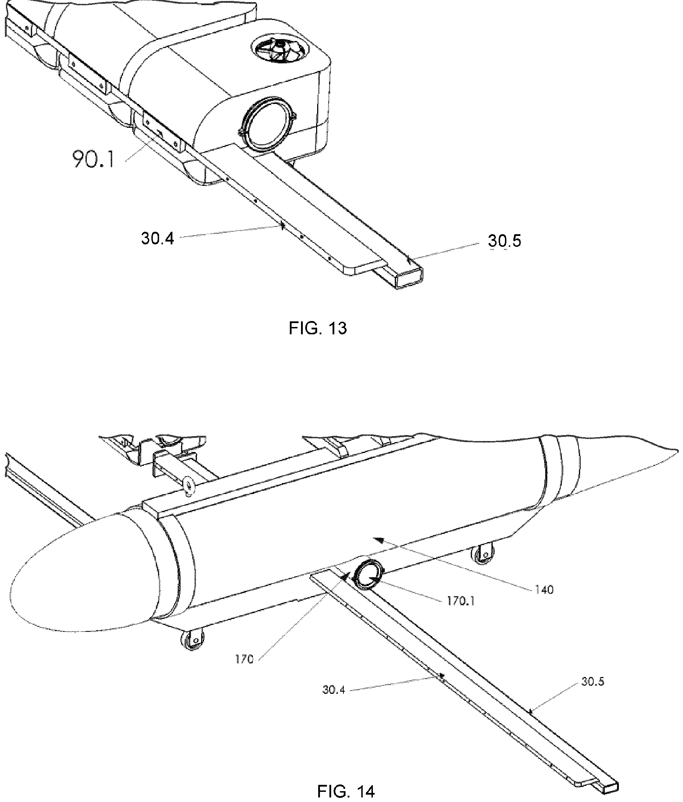

A hub conduit, shown at 170 in in Fig 8 and Fig 14, may be configured to allow the fluid to be distributed from the reservoir tank 140 to the first modular inlet pipe opening 60.5, as shown in Fig 10.

In some exemplary embodiments, the array 10 provides a plurality of modular units 50, as shown in Fig 1, with more detail shown in Figs 8 to 11. Each modular unit 50 comprises a reservoir and conduit unit 60.7, including the conduit 60.8 shown in Fig 8 and Fig 9, where the fluid may enter via the inlet pipe opening 60.5 and exit via the outlet pipe opening 60.3. The adjacent units 50 provide conduits 60.8 side by side with each inlet pipe openings of one modular unit 50 beside and downstream of the outlet pipe opening of the next upstream modular unit 50, as shown by the dashed arrow in Fig 8. Thus, the outlet pipe openings 60.3, shown in Fig 10, are connected to the adjacent inlet pipe openings 60.5 and so on, with the coupling formed and operatively sealed with an O-ring clamp 60.4. These clamps may be opened or closed by a clamp latch 60.6.

In some exemplary embodiments, the array 10 of modular units 50 may be configured to allow the transport or transfer of the fluid in a flow from one modular unit 50 to another through the inlet and outlet pipe openings 60.5, 60.3. A sealing cap 60.1 as shown in Fig 7 may be placed at the outlet pipe opening 60.3 of the most remote modular unit 15, to prevent the leakage of the fluid. Thus, in some exemplary embodiments, the inlet and outlet modular pipe openings 60.5 and 60.3 may function to distribute fluid along the array of modular units to allow each corresponding modular unit a local source of fluid for the delivery of the fluid or the production of a firefighting agent therefrom and the delivery thereof.

Referring to Figs 9 and 10, adjacent modular units 50 are in fluid communication and each modular unit and may be removed from the modular structure by unfastening the block bar 90.1 on the front spar 30.4 and a similar block bar (not shown) or other restraint at the central spar 30.5 and also opening the o-clamps 60.4 from both sides of the modular unit 50 being removed.

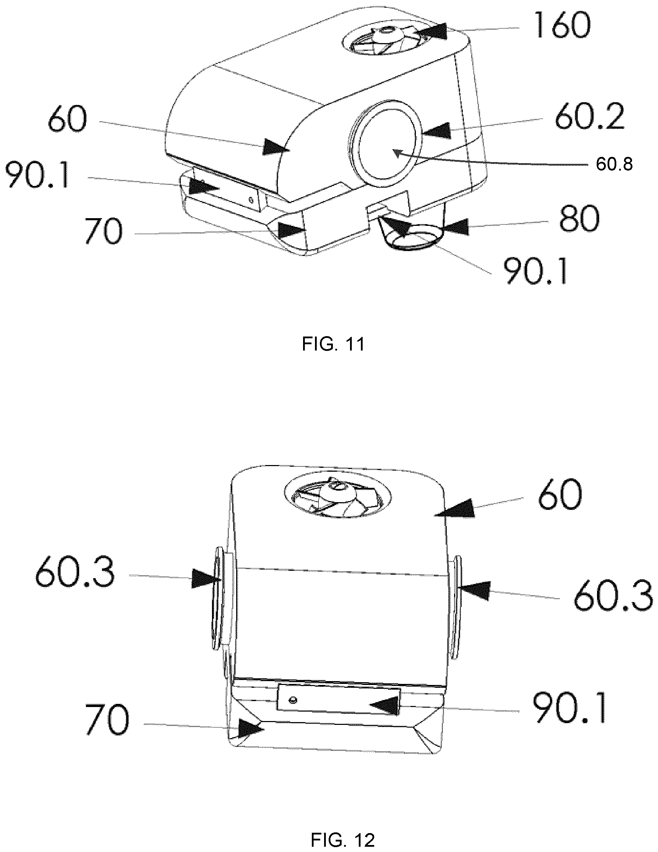

In some exemplary embodiments, as shown in Fig 9 and Fig 11, each modular unit 50 may comprise two compartments, including an upper compartment 60.7 providing a fluid reservoir and the conduit 60.8, and a lower compartment 70 providing for storage of power supply hardware and other components

In some exemplary embodiments, the upper compartment 60.7 may be configured to enable storage of the emergency fluid in each modular unit 50, while at the same time may assist to transport the fluid from one to another modular unit through the inlet and outlet openings 60.5, 60.3 that are in fluid communication with the conduit 60.8 and/or the upper fluid containing reservoir in the compartment 60.7.

In some exemplary embodiments, the upper compartment 60.7 is operatively sealed from the lower compartment 70. The lower compartment 70, in some cases, may be configured to store the electrical components and connection of the propeller fan 160 (as will be described). Alternatively, a battery, power generator or power supply from the helicopter may deliver power to the motorized fan 160.

In some exemplary embodiments, the lower compartment 70 (carrying electrical components) and the upper compartment 60.7 may be reversed so that the electrical components etc. are positioned above the fluid. Alternatively, the electrical components may also be located remotely from the modular unit. For example all power and electrical, control components from all modular units may be placed in one central compartment.

In some exemplary embodiments, each modular unit 50 may also provide a plenum, in the form of a vertical wind tunnel (or an air tunnel) 160.1 shown in Fig 9, located within the structure of the upper compartment 60.7 where the wind tunnel is open to the respective top and bottom boundaries of the modular unit 50. In this case, the wind tunnel 160.1 is operatively sealed from the upper fluid compartment 60.7 and the storage compartment 70, except for the controlled supply of fluids. To that end, one or more draining openings 160.2 may be placed at the lower end of the wind tunnel 160.1, and in communication with the upper compartment 60.7 for delivery of fluids therefrom to the wind tunnel 160.1.

In some exemplary embodiments, the fluid in the upper compartment 60.7 may not be released or drained, except by way of the openings at the base of the wind tunnel as shown at 160.2 substantially under gravity. Thus, gravity acts on the delivery of the fluid by the hydraulic head generated by the elevation of the fluid in the upper compartment 60.7, together with the elevation of the fluid in the tank 140 when in fluid communication with the upper compartment via the hub 170 and the conduit 60.8.

In some exemplary embodiments, the opening 160.2 may be placed at the lower end of the fluid level of the modular compartment 60.7 and in this way the force of gravity may allow the fluid to drain from a higher fluid level compartment to a lower level opening.

In some exemplary embodiments, using the force of gravity to drain the emergency fluid may reduce, if not eliminate, the need for pumps, which would otherwise impose additional weight and expense, while in other exemplary embodiments, the use of pumps or other pressurizing systems may be beneficial. For instance, a bladder in the tank 140 or another configuration to provide a pressurized main tank 140 may be deployed to increase the pressure exerted on the fluid, and thus increase the fluid flow rate. The force of gravity will generate head pressures which will increase with increasing elevation of the main tank 140 relative to the array 10. In some exemplary embodiments, the lower openings 160.2 may be fitted with a valve assembly to control the fluid flow rate to the wind tunnel. In this way the fluid may drain to the inside the wind tunnel toward the mesh screen 80 under gravity and/or by the presence of the flow of air in the wind tunnel.

In some exemplary embodiments, as shown in Fig. 9, an air flow generator is provided in the form of a motorized propeller air fan 160, which in this case is centrally mounted in the wind tunnel 160.1, to generate a positive pressure air flow.

In some exemplary embodiments, the power supply for the motorized fan 160 may be placed in the modular storage compartment 70 or through wires connecting the motorized fan to a remote power supply.

In some exemplary embodiments, at the lower end of the wind tunnel 160.1, a wire mesh screen 80 may be placed to enable the emergency fluid to form foam or mist depending on the fluid type and the fluid/air flow rate.

In some exemplary embodiments, a positive pressure air flow may be directed from the top opening of the wind tunnel to the lower opening, as viewed in figure 9, to provide sufficient air flow to mix with the fluid and pass through the mesh screen 80 to generate foam. In this way, the fluid to foam ratio may be controlled by controlling the airflow or the fluid flow. Thus, using positive pressure airflow may, in some cases, allow having a higher fluid to foam ratio of up to 1:1200 or more, as necessary and configurable for each particular application. The foam may thus increase the volume of effective fire retardant material, thus increasing the extent of a fire that can be covered by the aircraft payload.

Fig. 13 illustrates how the modular units 50 may be mounted on the support structure spars 30.4 and 30.5, in one of a number of possible configurations. Fig 14 illustrates the system 8 without the modular units 50, showing the tank 140, the hub connection 170 at the bottom of the tank where the fluid flow from the tank 140 to the hub connection 170 under the force of gravity, since it is placed below the tank 140. The hub connection opening 170.1 is configured to allow fluid to flow to the modular unit 50.

Fig 15 shows an exemplified system support structure to hold both the tank 170 and the array 10 of modular units 50 (both not shown). The support structure comprises the framework structure 30.2, and the front tank support beam 30.3, along with the tank support ring 301 to hold the tank. On top of the support structure, the suspension and reeling assembly 40 is mounted, while landing gear 150 is located beneath.

Fluid conduit 60.8 (fig 8) is provided to join with the fluid conduits of neighbouring modular units 50 in the array 10 to carry the fluid from the reservoir 140 and to distribute the fluid to the each modular unit 50. In this case, the fluid may originate from reservoir 140 which may be mounted on the support structure, or from the helicopter 42 or from another source on the lift system or an independent location with a connection conduit. Thus, reservoir fluid tank 140 may be made of single or multiple structures. The reservoir fluid tank 140 may be mounted on the modular unit 50, located at an aerial location, such as a helicopter or plane, or located on the ground a connection hose joining it to an aerial location such as a hovering helicopter, ground-based boom device or the like. In some exemplary embodiments, as shown, the fluid conduit 60.8 and reservoir may be integrated into a common structure.

A refill mechanism (not shown) may be placed on the system 8 to allow for refilling of the tank 140, which may also have a foam solution section to hold and mix the solution with water in certain concentrations. The fluid in the reservoir may be premixed or mixed inside the reservoir.

The fluid conduit 60.8 may thus be configured to supply each modular unit with the fluid to be distributed. Referring to Fig 10, a controllable valve, which may for instance be located adjacent the outlet opening 60.3 and the input opening 60.2, as shown schematically at 62, may also be provided to control fluid flow from one fluid conduit 60.8 to the other.

A fluid pump, or flexible pressure chamber, may also be used at to increase the fluid pressure and deliver the fluid from the reservoir and conduit 60.7 to the plenum 160.1.

The reservoir fluid tank 140 as well as the reservoir and conduit unit 60.7 may be configured to hold fluids useful for the methods described herein. These fluids may contain a range of fluids used by firefighter to control the fire such as water, solution, foam, gel, mixed fluid, chemical and other materials, as understood by those of skill in the art, for a range of uses such as firefighting, or for other uses such as in agriculture, oil spill containment, de-icing or climate control purposes, among other possible uses.

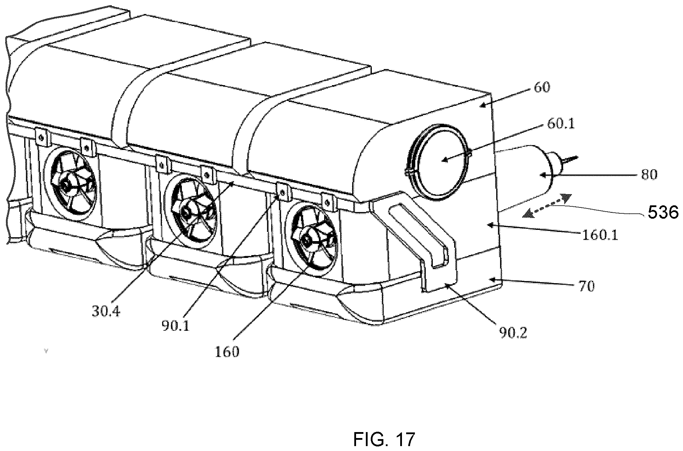

In some exemplary embodiments, as shown in figs 16 and 17, the wind tunnel 160 and motorized fan 160 may be configured horizontally, so that a travel path of the air flow through the wind tunnel may be aligned generally with a direction of travel T, or angularly off a vertical orientation relative to the mounted orientation of the modular unit 50, for example with the fluid compartment 60 positioned above the wind tunnel and the storage compartment 70 below the wind tunnel, as shown. Fig 17 shows a close up view of the modular units with the wind tunnel 160.1 placed horizontally. The modular unit may be secured to the support spar 30.4 by assembly block 90.1 and end plate 90.2.

In some exemplary embodiments, an opening and valve may be placed at the bottom floor (not shown) of the fluid compartment 60 to allow the fluid to flow inside the horizontal wind tunnel. The fluid may then be directed toward the mesh screen 80 placed at the end of the horizontal wind tunnel to form the emergency fluid in the form of foam or mist.

Water may be used alone or mixed with certain chemicals, solutions, slurries, and the like to make the water more efficient in controlling or preventing the fire. The fluid inside reservoir 140 may be configured to provide a mixing function for the solution mixer assembly to reach a desired concentration and/or consistency. The fluid may be premixed before loading.

Fluid types may depend on the utility and purpose of the mission that is of the type of fire or the like. For example, in case of a de-icing mission, the reservoir may be filled with de-icing fluid to allow deicing structures like high voltage cables, airplanes and others. For oil containment, fluids used in the industry may be deployed with exemplary embodiments herein, to contain and/or dissolve the spilled oil in land or sea.

Thus, in some exemplary embodiments, each modular unit 50 maybe fitted with an air flow generator to enable fluid distribution and/or foam formulation. This generator may comprise a structure to capture wind air or actively generate positive pressure flow by a motor and a motorized fan 160. The motor may be powered by water, electricity, gas or any power to generator to run the fan, provided it is capable of functioning on location in the unit at the required power level to deliver sufficient power. The air flow generator may also be deployed to mix fluid with air for fluid distribution, foam formulation and deployment. The air flow generator may be provided in a number of configurations including, in one example, a motorized propeller in different speed and size configurations depending on the application The power may be generated from an electrical, water pressure and gas motor to run the propeller to generate air flow.

In some exemplary embodiments, nozzles (shown schematically at 81 in Fig 9) may be provided which are in fluid communication with the reservoir or other fluid supply and are operably placed in front of, or otherwise relative to, the motorized fan 160 to enable the fluid to be mixed with air. Other configurations may be deployed to generate air flow, such as with scoops or hoods, to harvest air from wind currents generated on the structure during travel.

In some exemplary embodiments, an air entry opening may be provided to allow harvesting of wind generated from a helicopter rotor or wind force to flow and mixed with the fluid. In such case, a powered fan may or may not be deployed to generate more air flow.

Referring to Figs 1 and 2, the modular units may be carried side by side by the support structure 30 to allow them to be used as one system. The support structure 30 may be configured to secure the reservoir 30.1, 30.4, fluid conduit support structure 90, air generator units support structure 90, 90.1 and other system components

In some exemplary embodiments, the support structure 30 also comprises the aerial lift suspension system 40, to secure the modular units 50 together, in some cases with fluid delivery thereto and/or therebetween, as well as to provide an effective steering mechanism. Adding one or more horizontal stabilizers 130 (Fig 1) and vertical stabilizers 120 may help to balance the apparatus when in use.

Landing gear 150 may be positioned for effective landing and transportation. Supporting structure may allow the modular units 50, along with the supporting structure itself, may be designed to be non-removable or removable for assembly, disassembly, storage and transportation as need be.

In some exemplary embodiments, the use of the modular units 50 enables them to be configured in different configurations, or shapes, depending on the need, application and the like. For example an H shape may be deployed with several rows for the multiple modular units to provide a more condensed fluid delivery that is at an effective fluid delivery rate given. V shaped configurations may be more effective for narrower field delivery footprints, particularly in the system is being used in relatively narrow access ways and the like, such as in valleys, ravines and the like.

In some exemplary embodiments, the support structure 30 may be configured to enable the modular units 50 to be oriented between operative and inoperative positions either horizontally or vertically, to assist with storage, fluid refill in tight areas and transportation.

In some exemplary embodiments, the system 8 may comprise one or more modular units 50. Each modular may work independently or together to distribute the fluid.

In some exemplary embodiments, the modular unit may be permanently secured to the support structure or may alternatively be removable.

In some exemplary embodiments, power supply and controller functions may be carried out in situ or be delivered to the unit from a remote source.

In some exemplary embodiments, the aerial lift system may be configured to lift and carry the system 8 to a target area, such as a wild fire. One such example includes a helicopter. The system 8 may be also be hooked or mounted on the helicopter. Other lift systems may be used, such as firefighting vehicle ladders, airplanes, lighter than air vehicles, cranes and the like.

In some exemplary embodiments, the system 8 may be integrally formed with a drone structure, which may be controlled remotely. When used in connection with a winged aircraft, the system 8 may be placed below the wings or near the rear of the aircraft. In some exemplary embodiments, the reservoir may be placed inside the aircraft.

In some exemplary embodiments, the modular unit 50 may be incorporated in an airplane wing, or be configured with a wing-like cross sectional shape, to decrease drag, for example as can be seen by the curved leading profile and the trailing profile in dashed lines in Fig 16.

In some exemplary embodiments, two or more modular units 50 may be arranged together to achieve the desired shape according to the job required. The reservoirs may be secured to the support structure by using straps, screws or other couplings.

In some exemplary embodiments, a reeling assembly, one or more valves, and/or an air flow generator may communicate with a main controller to control and synchronizes their function, and may be placed near the operator and connected to the system by wired or wireless connection.

In some exemplary embodiments, the system 8 may be configured to give the operator an improved, or at least an alternative, controlled fluid drop with improved control of the amount, type, elevation, and area and distribution density. The operator may fill the reservoir with water and foam solution. The operator may then activate the water and foam solution mixer on the ground or during the flight.

During operation of some exemplary embodiments, an operator may fill the tank 140 with water and foam solution though a suction hose or a filling opening (not shown). The system 8 may then be suspended beneath helicopter 42 or other airlift vehicle for instance, by cable 44. The foam solution may then be mixed inside the tank prior to release the fluid to the modular units.

A valve may be deployed to control the release of fluid from the tank to the hub conduit 170. The operator may then prepare the system 8 prior to dispatch to a target fire area. In this case, the system 8 may reeled up, until reaching the target area, and then it may be reeled down using reeling and suspension mechanism 40 to a desired deployment elevation, according to the prevailing conditions at the site.

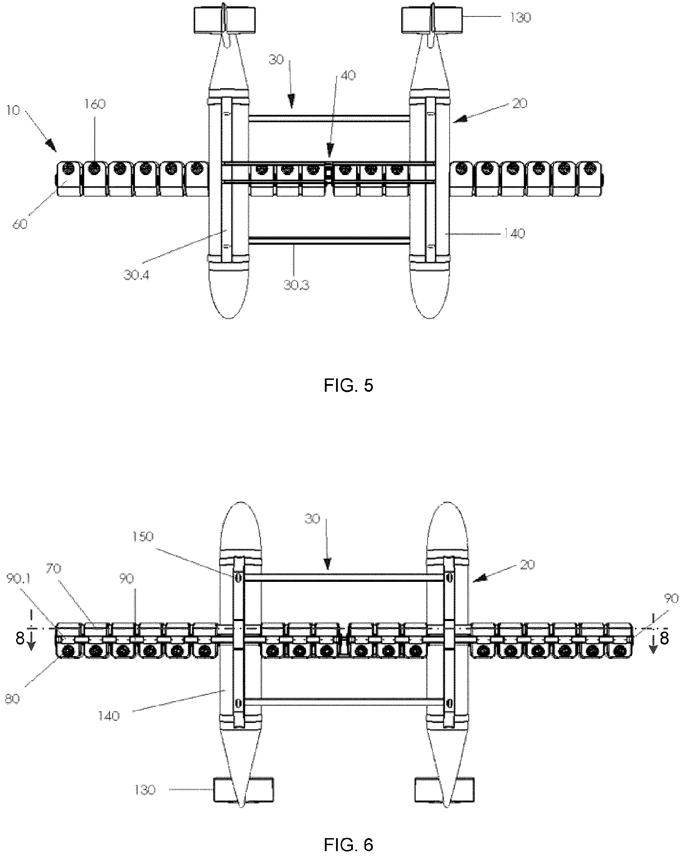

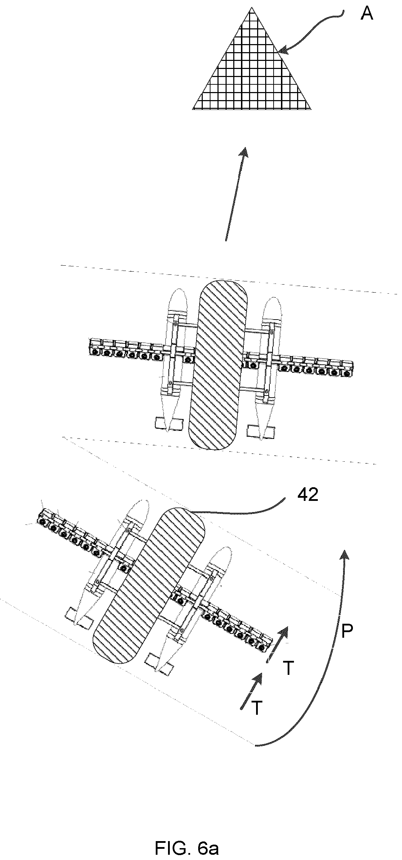

In some exemplary embodiments, as shown in fig 6a, the operator may select the target area, shown schematically by triangle A, like a wild fire and calculate the operation parameters applicable for a particular fluid drop for the wild fire, such as distance, flame height, temperature and other factors. In this case, the operator may direct the helicopter 42 toward the target area A while executing a number of designated actions with the reeling mechanism 40.1 and/or the thrusters 48 by way of activating controller 49, to operationally orient the array 10 in relation both to the helicopter 42 and the target area. Thus, for instance, the thrusters 48 may be activated to exert forces T to cause a change in direction along a path P, thereby to coordinate with a corresponding change in direction by the helicopter. This may be beneficial in some cases, where agility may be required to raise and lower the array 10 on one or more cables 46, while maintaining directional control of the array 10.

The operator may then coordinate an opening of the tank valve and power to the propeller fans of the modular units. Referring to Figs 8 to 10, the fluid then flows from the tank 140 to the hub conduit 170 then to the fluid compartment 60 of the nearest modular unit, at which time the fluid is then distributed along the modular units via the adjacent entry and exit pipes 60.3 and 60.5, and thus from the first fluid compartment 60 to the adjacent units until all the fluid compartment are filled with the emergency fluid. The fluid flows under gravity force from the tank to the modular unit to units below the tank. The fluid then drains though the opening at the bottom of the wind tunnel 160.2. The propeller fan 160 generates positive airflow pressure and pushes the air and fluid downward. Water, already mixed with foam solution, is mixed with air and falls under the action of gravity toward the mesh screen 80, to generate foam. After the emptying the load, the operator may then turn off the propeller fans and reel the modular system back up to is storage or travel position relative to the helicopter, or the like. The operator may then return or be directed to a refilling location to refill the tank for another operation. The operator may refill the reservoir by activating the refill pump, while the pilot will fly on top of the fluid source to allow the fluid refill for another operation.

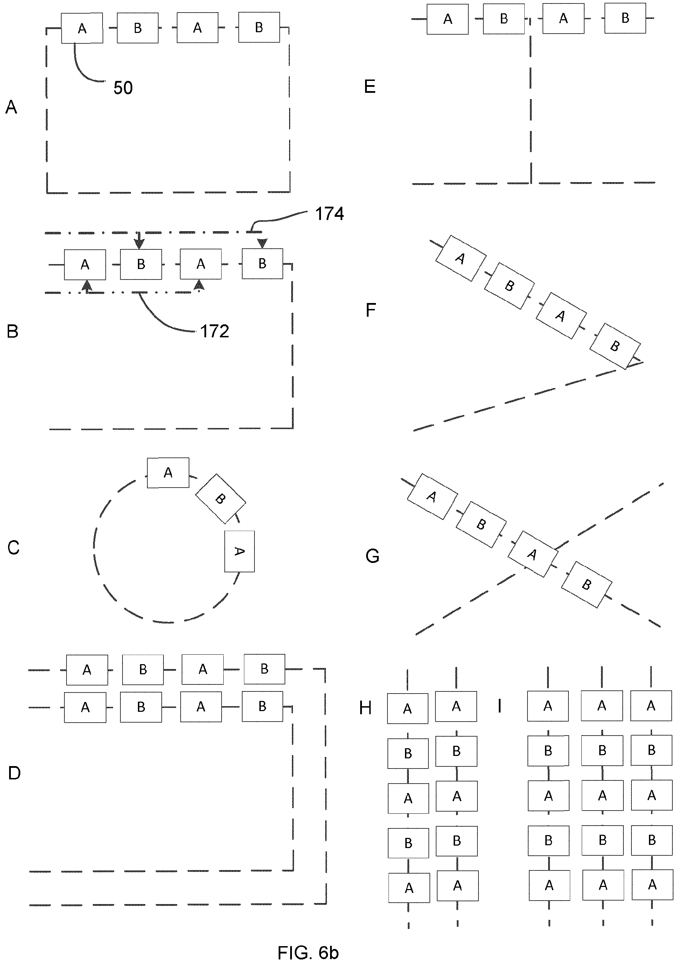

Referring to figure 6b, some exemplary embodiments may provide an aerial fluid delivery system, to allow one or more fluid types to deliver in one or more load drop path patterns, comprising a plurality of modular fluid delivery units 50, wherein each is configured to be assembled in a designated one of a number of modular configuration arrangements for operative suspension beneath a vertical lift according to one or more designated factors. The modular units may thus be organized into groups of fluid delivery units including:
a. a first group A of one or more modular units 50 operable to receive, or to contain a first designated fluid and responsive to a first control function for delivering the first designated fluid or a derivative thereof; and
b. a second group B of one or more modular units 50 operable to receive, or to contain a second designated fluid and responsive to a second control function for delivering the second designated fluid or a derivative thereof.

Thus, in the example configuration B, the first group A are supplied by supply conduit 172, while the second group B are supplied by supply conduit 174. The respective supply conduits may be directly in fluid communication with the corresponding plenums or to reservoirs, which in turn supply the plenums.

In some cases, the first and second designated fluids may be the same or different. The first and second designated fluids may be foams and/or liquids, with corresponding first and second forms, constituents, ingredients and/or flow rates. The first designated fluid may be a foam while the second designated fluid may be water.

Fig 6b schematically illustrates a number of possible modular configuration arrangements including II-, III- H-, U-, V-, C-, X-, and O- shaped configuration arrangements among other possible configurations, which may also be provided in one or rows or levels in one or more dimensions, relative to the helicopter.

The configurations exemplified in fig 6b may be applicable to both foam and non-foam generating fluid delivery units, owing to their ability to provide different operational configurations to allow different path drop patterns, so that a single aerial fluid delivery system may deliver more than one type of fluid in different path drop patterns, like drop width, concentration, thickness, amount, drop length and drop direction to address a particular operational scenario at a target location. In the case of a fire, the single aerial fluid delivery system may enable different geometric configurations, which may provide individual enhanced delivery benefits, especially when combined, in some exemplary embodiments, two or more groups of fluid types.

Thus, some exemplary embodiments may provide systems which are capable of providing arrays of modular units wherein each may work independently of the other, or the modular units may be synchronized to work together, with the same or different fluids, which may include different retardant types and the like, to provide the ability to deliver fluids with the same or different characteristics Such arrays may be shaped and/or configured to achieve different purposes/functions in the same operation, by deploying different modular units that have different functions Such flexibility enables the user, whether a firefighter or other operator, to create a fluid delivery program involving different functions, fluids, and the like.

In the case of firefighting, the firefighter operator may decide to use, for example, a wetting agent mist and foam, or water or the like, or in case the firefighter operator may decide to deploy a designated n drop path pattern, where different combinations of modular units deliver different fluids in the operation in different drop configuration arrangements. The firefighter operator may then designate a configuration / arrangement of the modular units. For example, one row may be deployed for a wetting agent mist and the second row for foam. Alternatively, one row may be deployed for a low expansion foam and second row for high expansion foam. The firefighter operator may decide to deploy a designated drop path arrangement according to a desired drop width, thickness, concentration, drop length and drop direction. The operator may then arrange the units in certain configurations or shapes to achieve the designated drop path pattern.

If wind becomes a factor, the firefighter operator may opt for a O- shaped modular configuration arrangement involving two concentric rings of modular units, wherein an outer ring of modular units deliver a relatively heavy foam or water, while an inner ring of modular units deliver a relatively lighter foam which is protected from blowing away, since the relatively lighter form is protected by the outer ring delivery. In some exemplary embodiments, in cases where the fluid source and/or the reservoir may be on the ground, the operator may attach the system 8 to the helicopter then fly near the target. The operator may reel down the system 8 to the ground, to allow the ground crew to connect the supply hose to the system 8. The pilot and operator may then fly over the target area and initiate fluid delivery. Thus, in some exemplary embodiments, a supplier hose may be connected to the system 8 to supply the fluid from the ground level, to supplement or to replace the central tank(s) 140.

In case of using water alone, the operator may, in some exemplary embodiments, remove the mesh screen to allow the fluid to be delivered in different ways like mist, large particles or liquid form. In some cases, the modular unit may thus operate without the mesh screen.

In some exemplary embodiments, the system 8 may be changed and rearranged in different configurations like have two rows of modular units, or square, T, H, or circular configurations. Thus, the modular units may be placed in different configurations, which may suit different fire sites, weather conditions, approach speeds and the like, to maximize the coverage area.

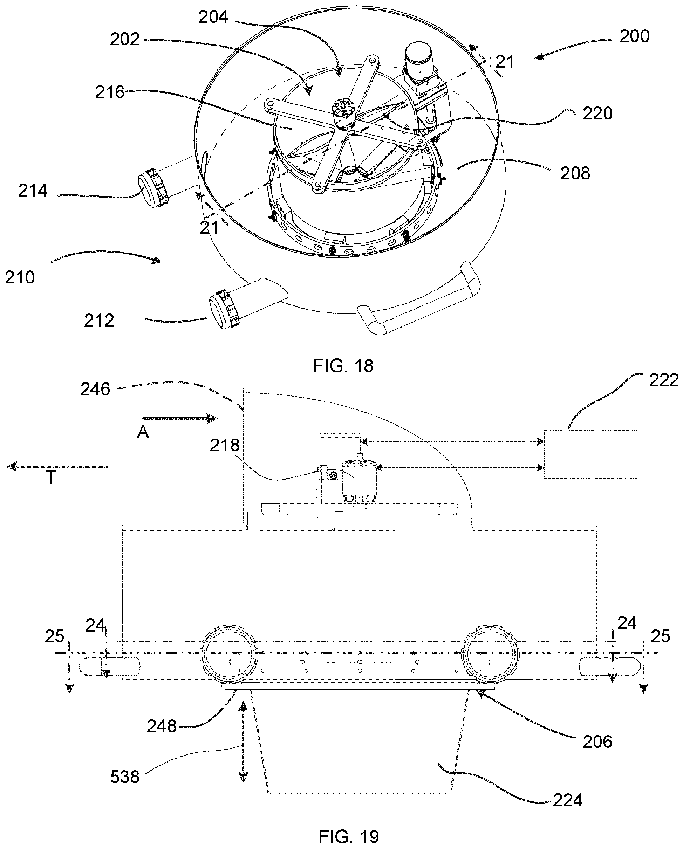

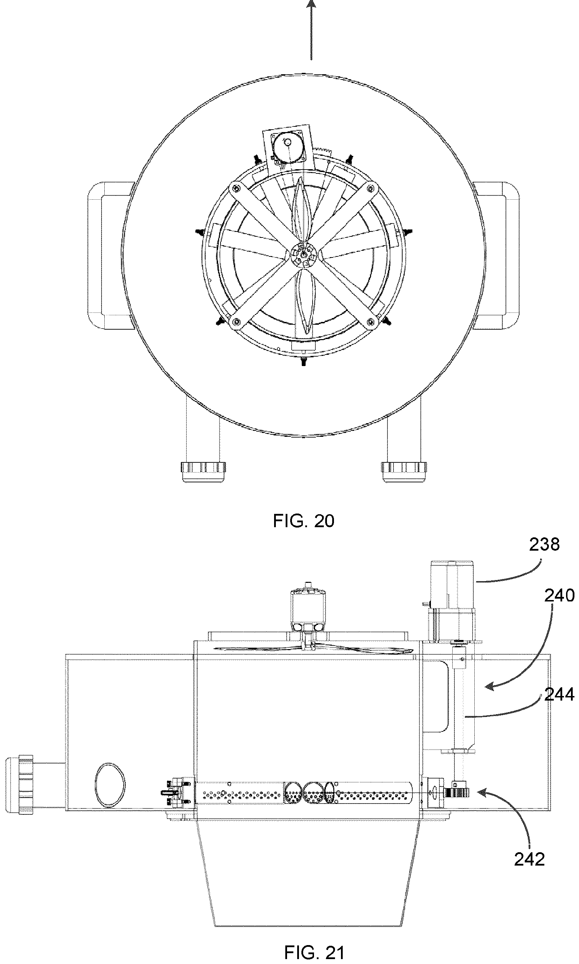

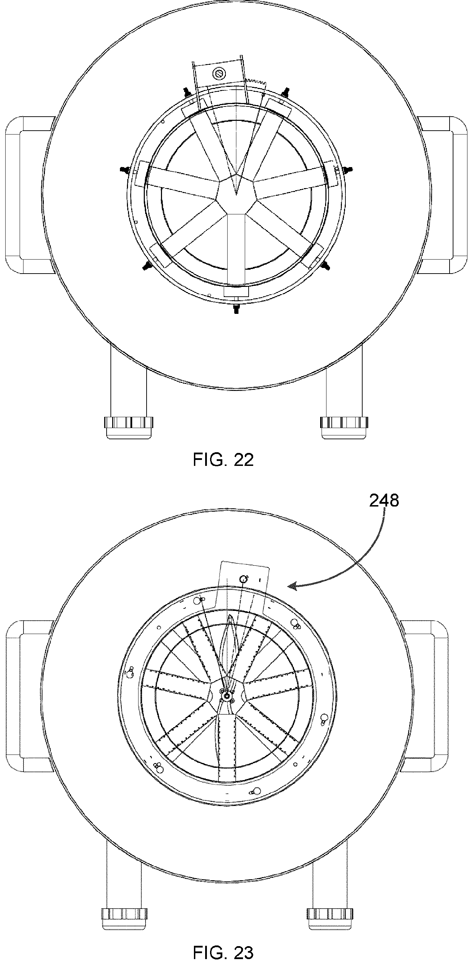

Further exemplary embodiments are shown in Figs 18 to 27, which illustrate one or more gravity assist foam generators for generating foam and fluid distribution for firefighting, aerial firefighting, agriculture, oil spill control, deicing, weather control, cleaning and cooling purposes.

In the exemplary embodiment shown in Figs 18 to 25, another generator is shown at 200 including a wind tunnel 202 having an inlet 204 and an outlet 206. The wind tunnel 202 in this case is located within a reservoir 208, which is supplied by a fluid conduit circuit 210 including an inlet pipe 212 and an outlet pipe 214. As with the earlier exemplary embodiments, the fluid conduit circuit 210 may be coupled to fluid conduit circuits of neighboring generators.

An air flow generator is provided in the wind tunnel 202 and includes a motor mount 216, supporting a motor 218 which in turn drives a propeller 220, which is located adjacent the inlet 204, and under the control of controller shown at 222. A mesh screen 224 is located adjacent the outlet 206.

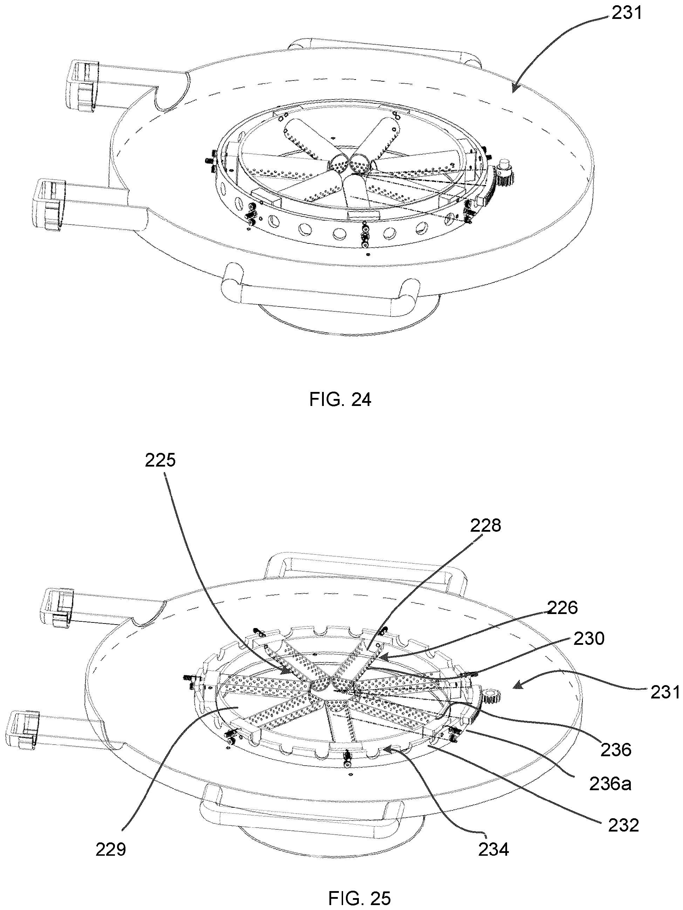

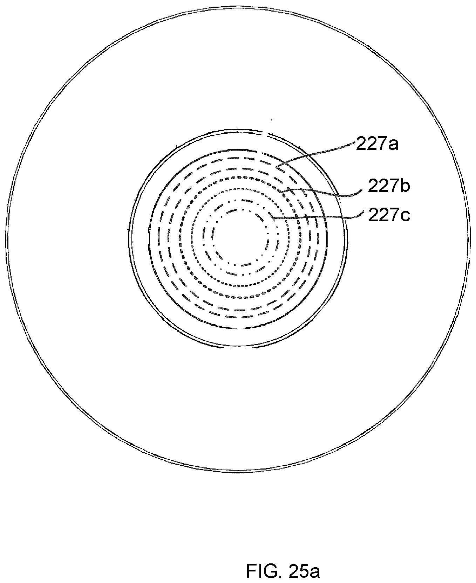

A gravity fed fluid distributor is provided at 225 which functions, in this example, as a manifold to receive the supply of fluid and distribute the fluid across the plenum. In this case, the fluid distributor is provided as a configuration of draining tubes 226 is positioned above the mesh screen mesh screen 224, as viewed in Figs 24 and 25 for the delivery of fluids to the wind tunnel. In this instance the draining tubes 226 have inlets 228 that are in fluid communication with the reservoir by way of corresponding openings in a boundary wall 229 separating the wind tunnel 202 and the reservoir 208. The draining tubes are also provided with a number of outlets 230 in the form of perforations. Thus, this configuration enables the fluid to be distributed across the plenum by way of an array of fluid stream sources in a radial configuration according to the radial configuration of the draining tubes 226. Other configurations may also be deployed to distribute the fluids substantially by gravity. For example, the pipes may be provided as a concentric series of rings as shown schematically in Fig 25a, with outlets as perforations, slits or in other forms to form the streams The tubes and/or rings may also be provided with nozzle or other structures at each outlet or at designated outlets, as desired.

A valve assembly 231 provides a valve ring 232 with passages 234 that are, in an open configuration, aligned with the inlets 228 to supply fluid to the draining tubes 226. The numbers of passages 234 on the valve ring 232 may be configured to allow the fluid to flow with less fluid turbulence between the reservoir and the draining tubes.

Also provided are shoe plugs shown at 236 which are fastened to the valve ring 232 by way of fasteners 236a and which are operable to block the inlets 228 when the valve ring is in a closed configuration, by aligning with the inlets to block fluids from access to the draining tubes 226. This closed configuration may be provided in other ways, such as by adjusting the valve ring 232 to misalign the passages 234 with the inlets 228. The valve ring is supported for movement between the open and closed configurations by way of drive motor 238 with a transmission 240 including a drive shaft 244 to drive a corresponding gear assembly 242, under the action of controller 222.

The mesh screen 224 may be configured to convert fluid to mist, drops, foam or droplets.

In this case, the wind tunnel 202 is placed in, or surrounded by, the reservoir 208, where the boundary wall 229 (Fig 25) acts as a fluid barrier. Fluid may thus enter each draining tube 226 only though the corresponding inlets 228, and where the draining tubes 226 are located near the outlet 206.

While several exemplary embodiments herein provide a wind tunnel 210 a tubular or cylindrical form, other plenum shapes may also be deployed to generate an air flow which may interact with a fluid to form a fluid of a desired consistency, for example depending on the configuration and/or parameters of the screen mesh, as well as the volume flow rate of the fluid and air flow.

Generally the central location of the wind tunnel 202 in the reservoir 208 may provide an efficient means of supplying fluid along the entire perimeter of the wind tunnel 202, under hydraulic pressure owing to the level of fluid therein, surrounding the wind tunnel 210 in a manner to allow the fluid to be in fluid communication with the draining tubes 226. The reservoir 208 may be placed at a level such that the level of the fluid therein provides sufficient static head to pressurize the fluid in the drain tubes 226, that is under gravity.

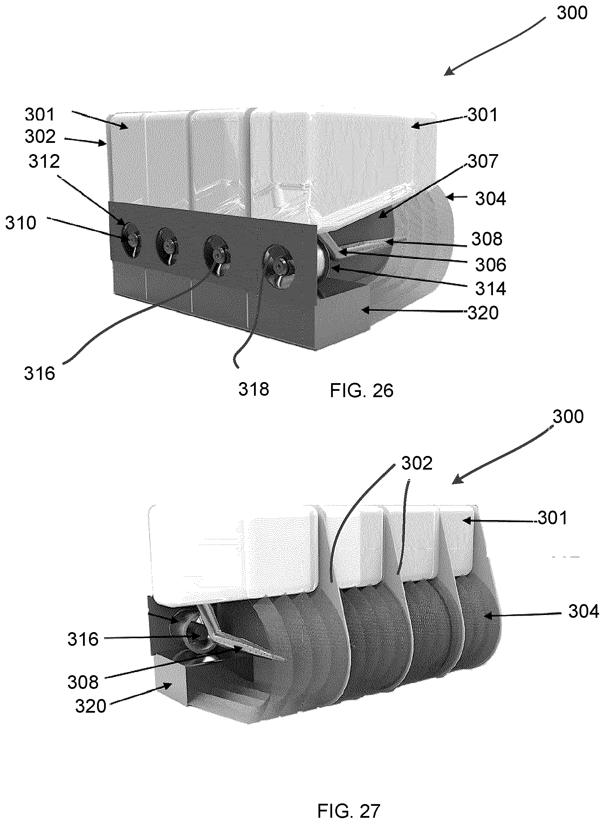

Secondary reservoirs may also be provided, as desired, to provide additional fluid supply to the reservoir and/or the drain tubes. In this case, secondary reservoirs may be located at a higher elevation to provide further static head pressure for the delivery of fluids to the wind tunnel, in some cases. The reservoir may be provided in a number of shapes, such as circular in cross section, as in Fig 18, or rectangular as in Fig 26. The reservoir and/or its housing may be integrated into shapes such as that of an airplane wing, or be integrated into a larger airplane wing structure. Further, more than one wind tunnel can be installed in one reservoir.

As can be seen in fig 18, the fluid conduit circuit 210 is configured to connect the reservoir 208 to a supply fluid source and may be placed at different alternative positions in relation to the reservoir. The fluid conduit circuit 210 may, in some cases, replace the reservoir 208, if one end is connected to a fluid source and the other end to the draining tubes 226 directly

The fluid conduit circuit 210 may be configured to permit fluid to flow from one modular unit to another. It can supply the reservoir with fluid by connecting two reservoirs together or through series of reservoirs. In the latter case, an array of reservoirs may be interconnected where one or more act as a fluid conduit to pass the fluid from one reservoir to another. The fluid conduit circuit 210 may be placed inside, outside or in between the reservoir 208 and connect the fluid supply with the generator 200.

The motor 218 and propeller 220 may be mounted in a range of positions, such as horizontal, upward, downward or angularly relative to the wind tunnel, depending on the flow direction, foam exit direction and wind direction and external air direction.

Other configurations may be deployed in place of the motor 218 and propeller 220. For example, air currents along path A caused by wind, or the speed of the supporting aircraft along travel path T, may be directed into the wind tunnel by scoops in one instance, or by orienting the intel to be directly open and aligned, in whole or in part, with the wind currents, such as a scoop shown schematically at 246 in fig 19.

Other valve configurations may be deployed to control the fluid flow rate in the draining tubes 226, to take into account variations in flow rates, as may occur with changes to static head in the reservoir 208 as the fluid drains therefrom, if not supplemented by an upstream fluid supply In the case of the valve assembly 231, the controller 222 may be configured to close or open the valve 250, either fully or partially, as desired The valve assembly 231 is thus configured to open, close and/or control the fluid flow rate, which is, in this example, driven by gravity, and will vary depending on fluid level, elevation position of the fluid from the draining point and the draining opening size.

The controller 222 may be provided in the form of a microcontroller, or operate as an application on a computing device such as a tablet, notebook computer, smart phone, or the like, and be connected to a power supply and/or another controller, for instance, to control the speed and the timing of the valve ring function subsequently it will control the fluid flow inside the draining tubes.

Different types of valves may be configured to control fluid flow through the draining tubes. Values may be placed at different locations. For instance, a valve may be placed at the outlet of the reservoir 208 where the draining tube 226 is connected thereto. In another instance, a valve may be placed at a level of a secondary reservoir, so that when the secondary reservoir is open, fluid may be delivered to the reservoir 208 and thus though the draining tube outlets 230. In still another instance, discrete valve units may be deployed at or inside each draining tube 226.

The draining tubes 226 are provided with multiple outlet openings to allow the fluid to drain in a substantially equal/even manner so that the fluid is similarly delivered to the surface of the mesh screen 224. The draining tubes 226 and are located adjacent a lower end region of the wind tunnel 202 and at a level which may be configured to optimize fluid flow from the reservoir. For instance the draining tubes may be at a lower region of the reservoir to provide, in some cases, a maximum static head for fluids entering the tubes.

The draining tubes 226 are configured to be downstream of the inlet 204 so as to interrupt the air flow to initiate the fluid and mixing to formulate foam or smaller fluid particles In this case, the inlet 228 for each draining tube 226 is placed at the boundary wall 229 to allow the corresponding shoe plugs 236 to open and close the inlet 228. The draining tubes 226 are provided with multiple outlets 230 to allow better distribution of the fluid or with other opening configurations such as grooves, gaps and the like, in order to develop and control a designated fluid distribution pattern at the outlet 206 of the wind tunnel 202, such as to substantially evenly and/or equally distribute the fluid for correspondingly even and/or equal foam formation across the mesh screen 224. In addition, the draining tubes 226 may be sloped downward to allow the fluid draining. The fluid outlet of the draining tubes 226 may thus, in some cases, be achieved by making multiple smaller outlets 230 on each draining tube 226, to control the fluid distribution. Any shape or formation of draining tube may be installed as it has fluid inlet and fluid outlet placed at the bottom or lower position reference to the reservoir.

The mesh screen 224 may be provided in different screen opening sizes and be placed at the outlet opening 213 of the wind tunnel airflow 210 and/or immediately downward of the draining tubes 226, and secured by screen adaptor ring 248. Different mesh screen opening sizes can provide different type of foams, depending as well on the consistency of the fluid being supplied. The openings may themselves be of different shapes, such as circular, square or triangular. The screen may itself be configured to be planar, zig zag shape, dome v-shape in cross section. The mesh screen may be changed or replaced by attach or detach the screen adaptor ring 248. If desired, the mesh screen 224 may be removed if needed, and/or to enable the generator to be used without the mesh screen 270 in an alternative operating mode.

The generator may be used as in the following manner. First, the generator may be oriented in an upright manner with the reservoir 208 placed above the drain tubes. The reservoir 208 may be filled with fluid though the fluid conduit 210, with the valve ring 232 closing the inlet openings 228 by positioning the shoe plug 236 in front of the draining openings 228.

The motor 218 may then be turned on by the controller 222 to rotate the propeller 220, causing the airflow with air from the inlet opening 204 of the wind tunnel 202 toward the outlet opening 206. When the designated airflow rate is reached, the controller may actuate the valve assembly 231 to rotate the ring 232, so that the shoe plugs 236 move to open the inlets 228, to cause fluid to enter the draining tubes 226 and exit the outlets 230. Air and fluid then meet at the elevation or level of the outlets 230 and fall under gravity or otherwise travel with the air flow toward the mesh screen 224.

Fluid and air reach the mesh screen 224 to generate foam or another form such as smaller particles, droplets and the like. Meanwhile, while the fluid conduit circuit 210 keeps supplying the reservoir 208 with fluid.

When the operation is completed, the valve controller 222 may then move the valve ring 251 and close the inlet opening 262 to turn off the supply to the draining tubes 226. The controller may then switch off the motor 218.

Figs 26 to 28 show an exemplary embodiment of a generator 300 in which the reservoir 301 is placed relatively higher in position than the wind tunnel 310. In this case, the draining tube 306 is at level or lower position from reservoir 301. A separation boundary 302 is configured to separate or delineate the generator 300 from other adjacent generators in an array. The mesh screen 304 is behind the draining tube 306 in a region 307 below the reservoir 301, which provided with draining tube outlet holes 308 along its length to a remote end region. The wind tunnel 310 is provided with an inlet 312 and an outlet 314 with a motor 316 positioned at the inlet 312 to drive propeller fan 318. An electrical, support and storage compartment is also provided at 320.

In this configuration, the mesh screen is extends from just below the reservoir 301 and extends beyond, below a remote end region of the corresponding draining tube 306, and back to a location adjacent the storage compartment 320. In this case, the mesh screen has a corrugated cross section.

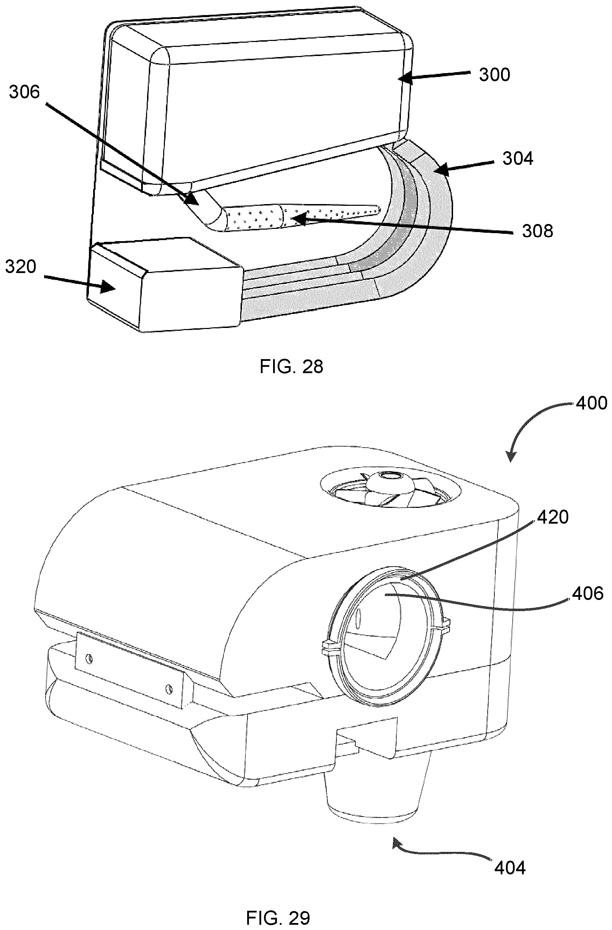

Figs 29 to 31 show another exemplary embodiment of a modular foam generator 400 for assembling, in multiples of at least one, an aerial foam delivery array to be suspended from an aerial vertical lift. In this case, the foam generator 400 is in operative fluid communication directly or indirectly with a fluid source to receive supply fluid therefrom. The foam generator 400 has a foam outlet 404 and is configured to deliver foam therefrom to a target activity site; wherein the modular foam generator system is configured for assembly with at least one other instance thereof to form the aerial foam delivery array.

A supply fluid passage segment is provided at 406 and is configured to be contiguously assembled with corresponding supply fluid passage segments of adjacent instances of the modular foam generator in the array, to form a supply fluid pipeline configured to distribute the supply fluid to the modular foam generators in the array.

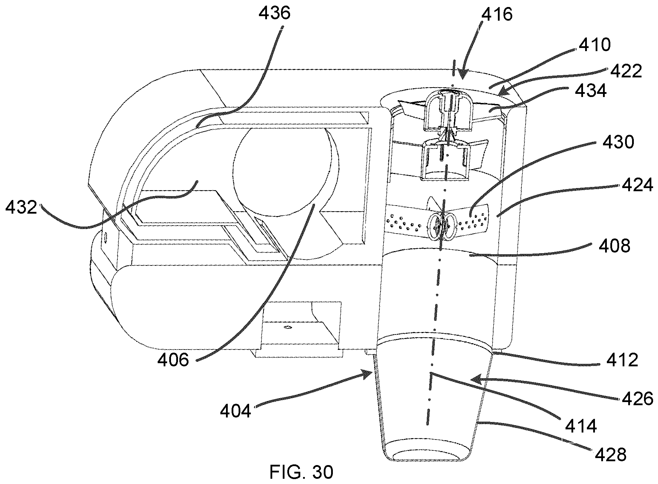

Referring to Fig 30, a plenum 408 is located downstream of, and in operative fluid communication with, the supply fluid passage segment 406 to receive supply fluid therefrom substantially by gravity. The plenum 408 has first and second, in this case upper and lower opposite boundaries 410, 412, along a central plenum axis 414. An air inlet 416 is adjacent the upper boundary 410 and is open to atmosphere to receive an air flow therethrough, and the foam outlet 404 is located below the lower boundary 412 for delivering foam therethrough to fall under gravity therefrom.

In this case, the inlet and/or the foam outlet 404 is/are symmetrically arranged relative to the plenum axis 414. The supply fluid passage segment 406 extends transversely relative to the plenum central axis 414, and includes opposite open-ended boundaries 420 (fig 29) for fluid coupling with corresponding boundaries of adjacent supply fluid passage segments in the array.

As can be seen in Fig 30, the plenum includes:
a a first air inlet zone 422 including the inlet and configured to generate the air flow at a first designated volume flow rate;
b. a second supply fluid flood distribution zone 424 downstream of the first air inlet zone 422 and configured to receive the supply fluid from the corresponding supply fluid passage segment 406 substantially by gravity and configured to form a distributed flood of fluid at a second designated flow rate; and
c. a third foam forming zone 426 downstream of the second supply fluid flood distribution zone 424 and encompassing a mesh screen 428, and configured to receive the air flow at the first designated volume flow rate and the distributed flood of fluid at the second designated volume flow rate, to generate foam at an expansion rate according to the first and second volume rates.

The second supply fluid distribution zone 424 includes an array of one or more distributors 430 extending laterally across the plenum 408, to distribute the supply fluid across the plenum 408 along at least a plurality of radial distribution paths.

The distributors 430 are, in this case, perforated and include a plurality of perforated pipe members, each with an elongate cross section having a major axis substantially aligned with the plenum axis 414.

A reservoir 432 is configured to be in operative fluid communication with the supply fluid passage segment 406 for receiving the supply fluid therefrom and to deliver the supply fluid to the plenum. The reservoir 432 surrounds the plenum 408, at least in part, and the perforated distributors are in fluid communication with the reservoir at a plurality of locations spaced circumferentially around the plenum.

A pressurizing portion operatively associated with the air inlet for pressuring the air flow through the plenum. In this case, the pressurizing portion is active and includes a motorized fan 434.

In some exemplary embodiments, the pressurizing portion may be passive. In this case, the plenum may be configured to draw air flow into the air inlet from a leading region of the modular foam generator relative to a travel path thereof during deployment. In some of these cases, the plenum axis may be aligned with the travel path. One or more air guides may be provided to direct air into the air inlet, as shown earlier schematically in Fig 19.

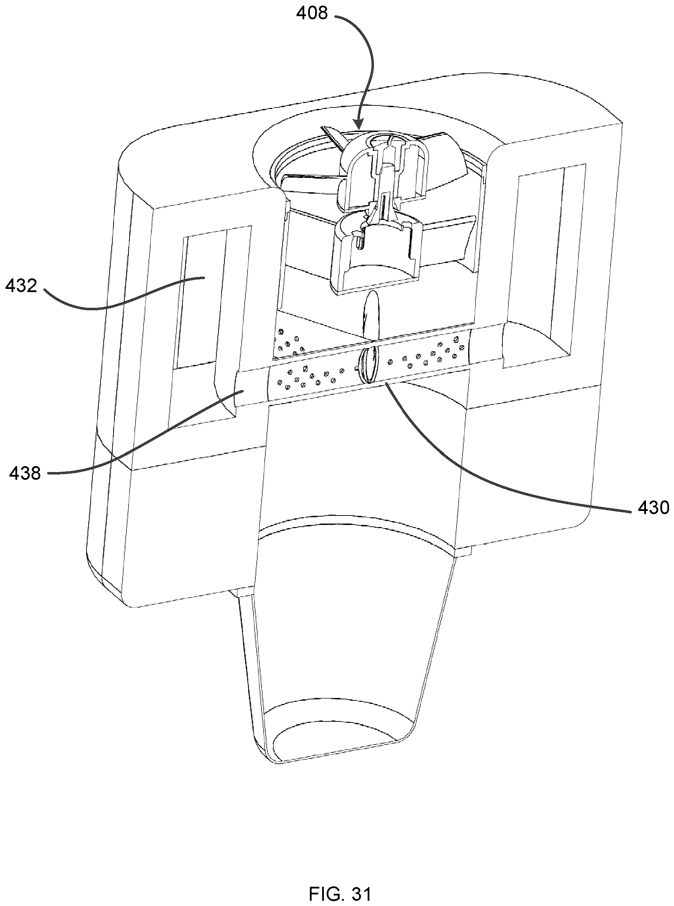

The reservoir 432 is further provided with a jacket chamber 436 for circulating fluids therethrough, as may be useful in some cases for temperature control in the reservoir 432 in cold climates. In the version shown in Fig 31, the reservoir 432 can be seen to extend around the plenum 408. Thus, the distributors 430 extend beyond the plenum to an opening in the reservoir as shown at 438.

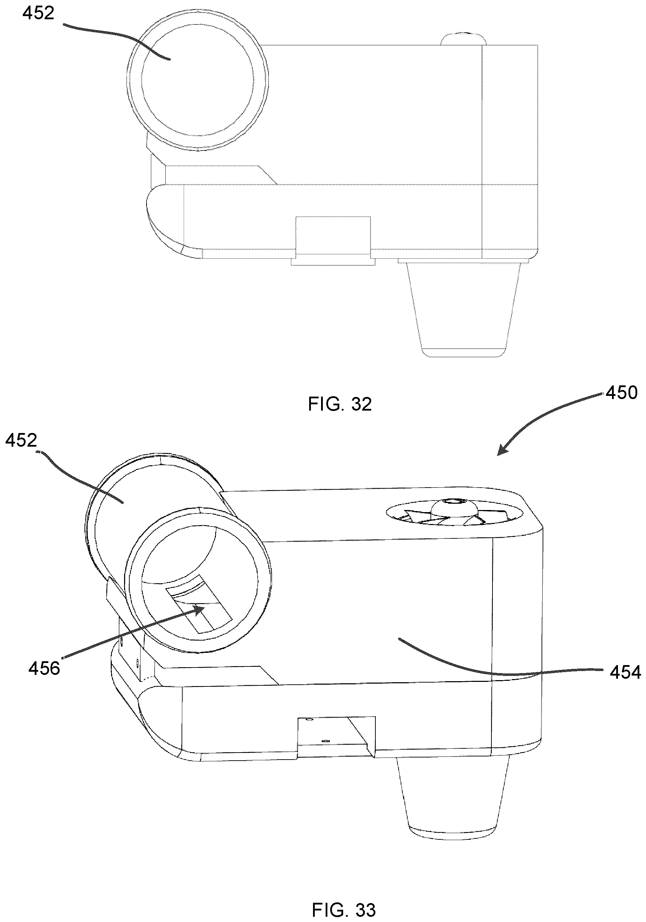

Figs 32 and 33 illustrate an exemplary embodiment of a foam generator shown at 450 in which fluid passage segment 452 is in fluid communication with reservoir by 454 way of opening 456. In this case, the fluid passage segment is not surrounded by the reservoir but rather offset relative thereto.

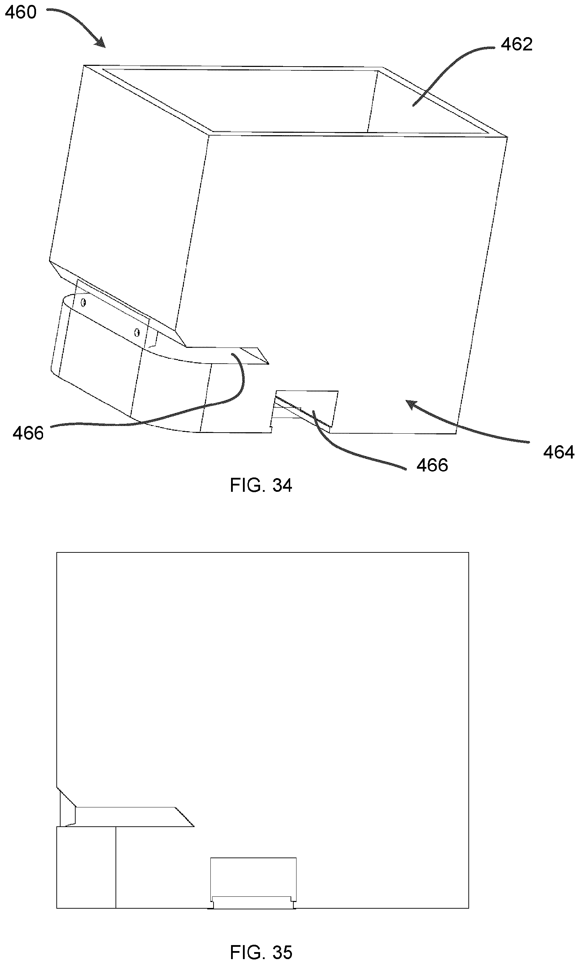

Figs 34 and 35 illustrate an exemplary embodiment of a carrier device 460 having a storage bin supported by a mounting configuration 464 to be mounted on a support structure, such as that shown at 30 in earlier embodiments with passages 466 to engage the front and central spars 30.4 and 30.5. This embodiment is representative of the other devices which may be combined with the generators in the arrays shown herein. Such devices may provide a range of functions, such as storage, where access to the storage may be provided from different access points, for instance, if required. Thus, the aerial module lift systems disclosed herein may be configured to carry a range of different module apparatus in multiples, for different functional purposes, such as a basket module to transport goods, carrying a module saw or other processor for such actions as cutting sections of a tree, such as a tree top, which may not be easily accessible from a ground location, a modular fluid spraying device for agriculture use, or module camera unit for image recording. These module units may thus be designed with a universal mounting zone or structure to correspond to the mounting zone of the lift system support frame for easy mounting and dismounting and therefore this aerial lift system can be used for different functional purposes.

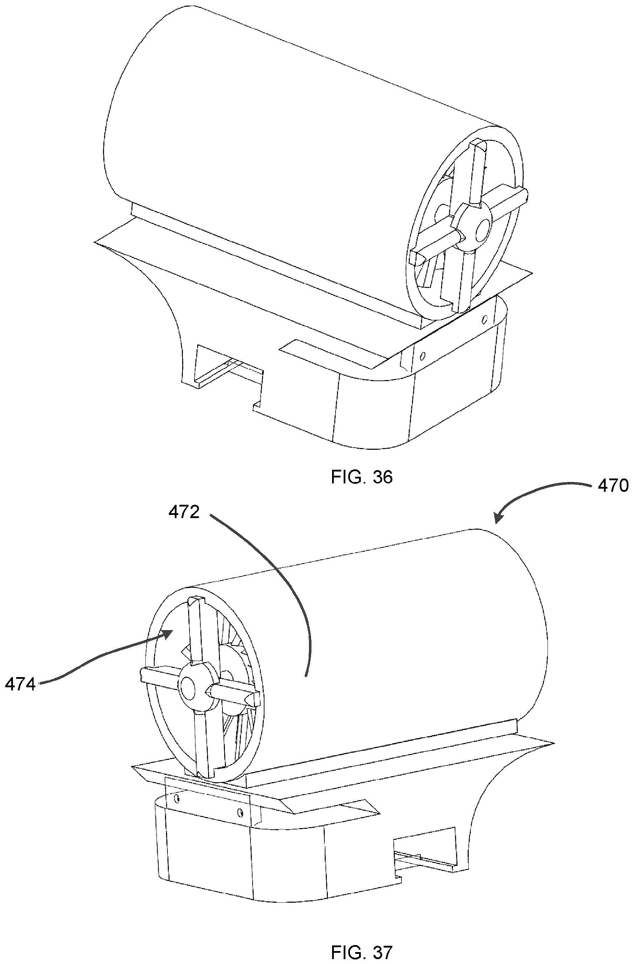

Another example of a modular device for use with the above described arrays is shown in Figs 36 to 38 , in the form of a thruster device 470 with a housing 472 having a motorized fan 474, for delivering thrust in a manner to control the orientation of the array, and which may be adjustable in orientation to provide three-axis adjustment to control, for instance, pitch, yaw and roll.

Thus, the modular foam generator may be deployed in an aerial foam delivery array, comprising a plurality of such modular foam generators, along with an aerial foam delivery array support to support the plurality of modular foam generators. Valves may also be provided to control the fluid flood flow to the plenum fluid distributor extension, which may be provided in the form of a ring assembly holding or acting as valve to each corresponding plenum fluid distributor extension.

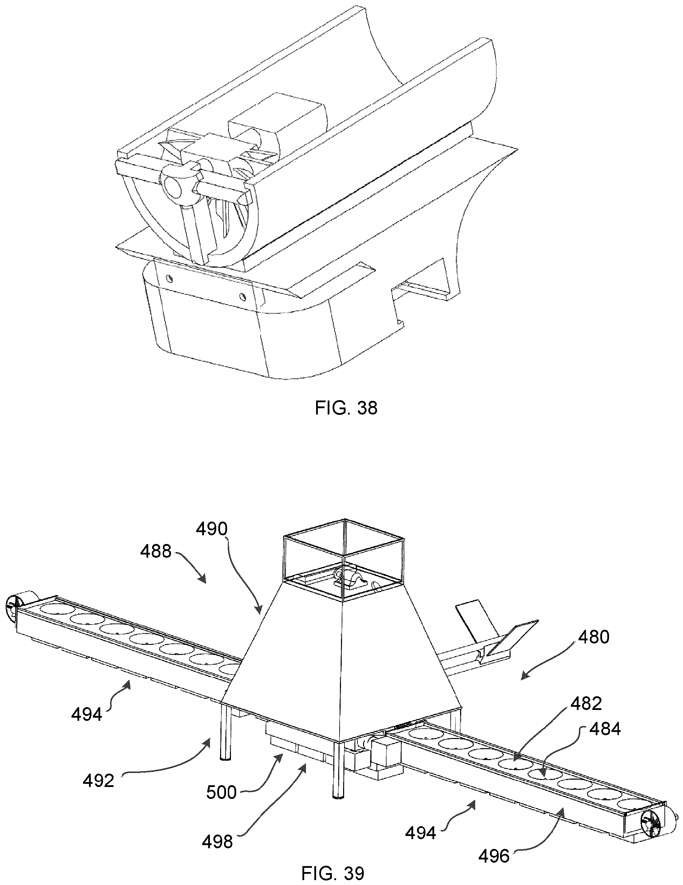

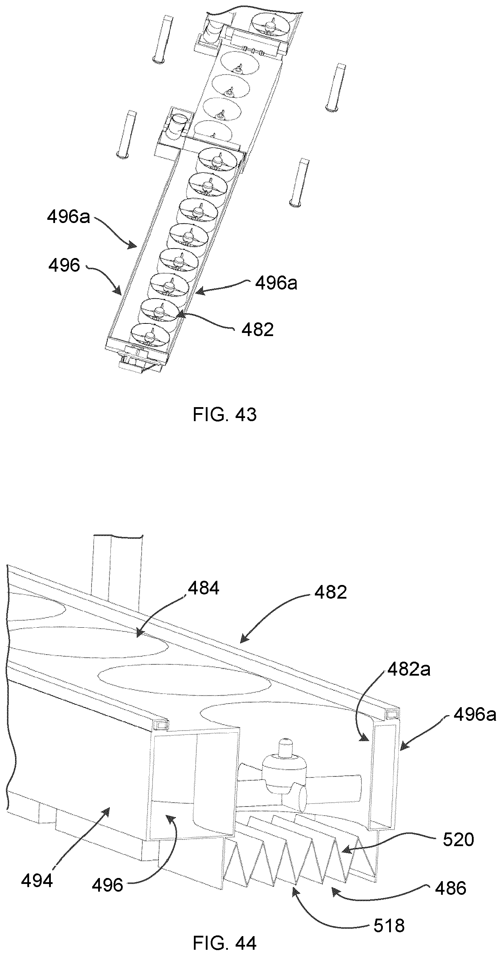

Figures 39 to 47 show another exemplary embodiment of a foam generator array 480 for use in aerial foam delivery activities, comprising an array of plenums 482, each including an air inlet 484 open to atmosphere to receive a flow of air and a foam outlet 486 (figure 44). The plenum 482 is configured to be downstream of, and in operative fluid communication directly or indirectly with, a supply fluid source 488, in this case in the form of at least one reservoir 490, to receive a supply fluid therefrom substantially by gravity. Each plenum 482 is configured to mix the supply fluid and the flow of air to generate foam at, upstream and/or at the foam outlet 486. A support structure 492 supports the array and includes a pair of outwardly extending lateral support structures 494 which support both a sub-array of plenums 482, along with at least one supply fluid segment 496 which is fluid communication with the reservoir 490. In some exemplary embodiments, a central subarray 498 may be located beneath the reservoir 490 and between inner end regions of the lateral support structures 494.

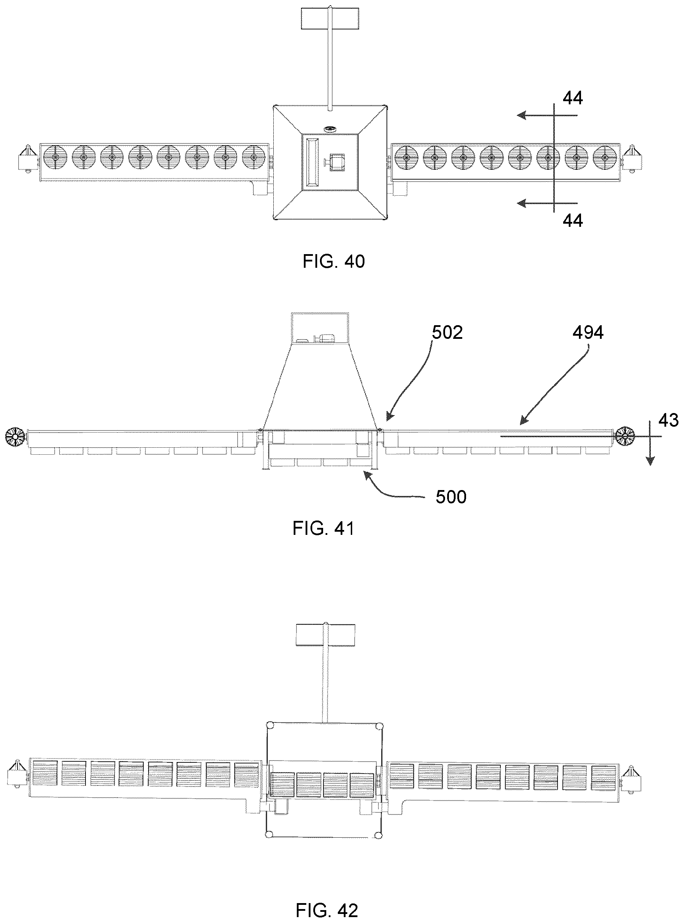

In some exemplary embodiments, the lateral support structures 494 may be arranged to be pivotally mounted to a central support structure 500, by way of pivot couplings 502 (figure 41), or otherwise configured to provide operative and inoperative positions or orientations, for example in the latter case to provide for more efficient transport between a set up location and a target activity site.

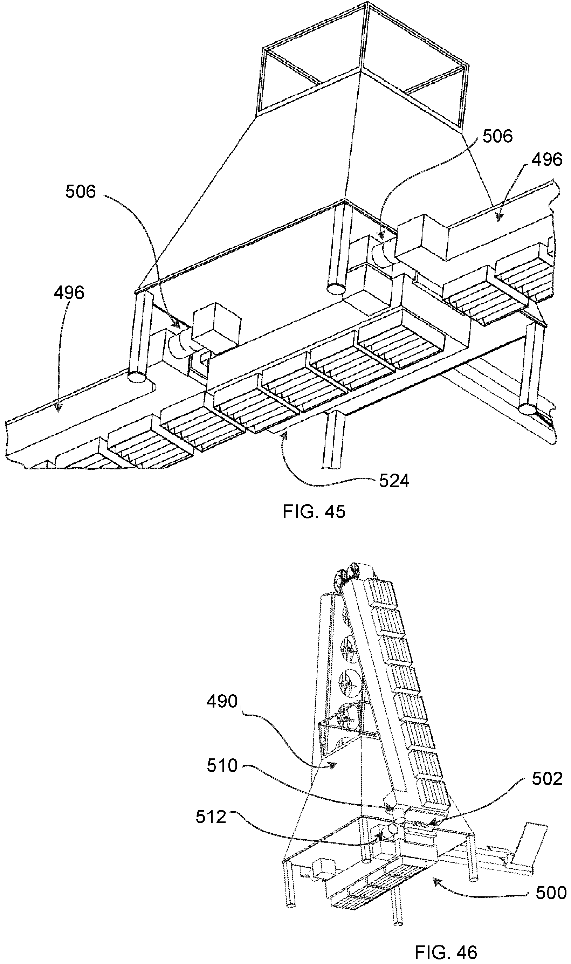

Referring to figures 41, 45 and 46, the reservoir 490 is located on the central support structure 500 and each of a pair of transfer couplings 506 cooperates with a respective pivot coupling 502 to provide fluid communication between the reservoir 490 and the supply fluid segments 496. In this case, each transfer coupling includes a pair of complementary transfer segments 510, 512, each including a fluid passage, which cooperate to fluidly couple with one another, at least when the corresponding lateral support structure 494 is in its operative position (figure 45). In this case, the transfer segments 510, 512 separate when the lateral support structure is in its inoperative position as shown in figure 46.

Referring to figure 44, the supply fluid segments 496 are thus configured to receive one or more of the array of plenums 482 therein. The plenums 482 and the supply fluid segments 496 have generally aligned side walls 482a, 496a, which spaced from one another to contain the supply fluid therebetween. The plenums 482 and supply fluid segments 496 are further configured so that the supply fluid in the supply fluid segment surrounds the side walls 482a of the plenums 482. This can be seen in Figure 43 with each of the plenums 482 located inside the opposing side walls 496a of the supply fluid segment 496.

Thus, in some exemplary embodiments, support structure 492 is configured to provide a pair of opposed lateral support structures 494 to support a corresponding pair of opposed lateral supply segments 496, each with a subarray of plenums 482 therein, and a central support structure 500 supporting the reservoir 490. In this case, the opposed lateral support structures 494 are transferable between operable and inoperable positions relative to the central support structure 500 by way of pivot couplings 502.

In some exemplary embodiments, each lateral supply segment 496 may be configured to be in fluid communication with the reservoir 490 at least when the opposed lateral support structure 494 is in the operable position as shown in figure 39. The fluid transfer coupling 506 is provided between each of the lateral fluid supply segments 496 and the reservoir 490, wherein the coupling 506 is engaged at least when the lateral fluid supply segments 494 are in the operative position. In this case, the coupling may be configured to disengage when the lateral supply segments 494 are in the inoperative position.

Referring to figure 46, one or both of the transfer segments 512 may be further configured to route fluids to both the supply fluid segment 496 as well as a centrally located supply fluid segment 524, which is located beneath the reservoir and which locates the central subarray 498 therein. If desired, the centrally located supply fluid segment may remain operate independently of the lateral supply fluid segments.

The coupling 502 may include pair of fluid passages, with one in each of the transfer segments 510, 512, each in communication with the corresponding lateral fluid supply segment 494 and the reservoir 490, wherein the fluid passages in the transfer segments 510, 512 are configured to be decoupled when the lateral supply segments are in the inoperative position.

Referring to figure 44, located at a lower boundary of each plenum 482 is a mesh screen 518 formed by way of a number of angularly oriented mesh panel portions 520 to form an angularly corrugated mesh configuration to facilitate formation of foam, though the configuration be provided in other forms, such as in a sinusoidal wave or square wave configuration.

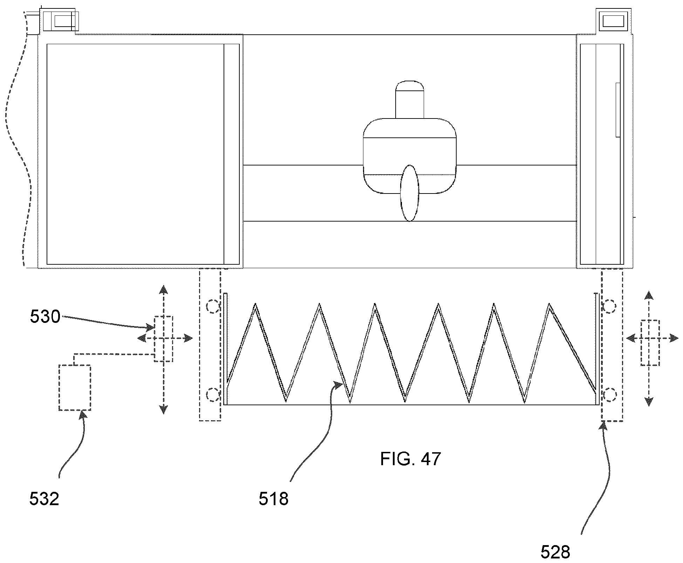

Furthermore, if desired, the position of the mesh screen 518 relative to the corresponding plenum 482 may be arranged to be adjustable, as shown in figure 47, to correspondingly controllably adjust one or more characteristics of the form delivered therethrough. This could be achieved, for instance, by mounting the mesh screen 518 on a carriage, or adjustable structure, as shown schematically at 528 to displace the mesh screen 518 relative to the plenum 482, together with one or more actuators 530, for example under the control of a controller 532 which may be located landside or on the carrying helicopter or other transport device, or remote to and in communication with a such controller by way of one or more wired or wireless communication paths.

If desired, the movement of the undercarriage or adjustable structure 528 may be configured to provide the movement in more than one direction, as represented by the two axis arrows.

The adjustability of the mesh screen 518 may be applied to one or more of the mesh screens at the outlets of one, several or all of the plenums of the generator array 480, or for that matter on any of the exemplary embodiments shown herein including the modular unit 50 (for example as represented by arrow 534 in figure 10 and arrow 536 in figure 17) and generator 200 (for example as represented by arrow 538 in figure 19).

Thus, in some exemplary embodiments, a foam generator may be provided with an adjustable screen mesh mount, that allows for a controlled adjustment of the distance of the mesh screen relative to a fluid discharge outlet of the plenum or another site in the plenum itself. An actuator may be deployed to provide the adjustment to move the mesh screen away from, or closer, to the foam generator fluid discharge outlet to provide the operator one or more additional options to adjust, for example, a foam-water ratio output of the foam generator and/or to enable the screen mesh mount housing surfaces to be used to increase or decrease a flight surface control area (in other words the effective area of the assembly whose size would present a drag coefficient to the overall calculation of drag for the transport of the assembly below during use.

What has been described and illustrated herein are a number of exemplary embodiments of the invention. The terms, descriptions and figures used herein are set forth by way of illustration only and are not meant as limitations.

## Claims

1. A foam generating device, comprising a plenum (408) configured to be suspended from an aerial lift for use in aerial foam delivery, the plenum (408) comprising:
i. a first air inlet zone (422) open to atmosphere and configured to generate an air flow at a first designated volume flow rate, the first air inlet zone including an active pressurizing portion operatively associated therewith for pressuring the air flow through the plenum;
ii. a second supply fluid distribution zone (424) downstream of the first air inlet zone (422), the second supply fluid distribution zone including a reservoir (432) configured to be in operative fluid communication with a supply fluid source for receiving the supply fluid therefrom by gravity and to deliver the supply fluid to the plenum by gravity, the second supply fluid distribution zone (424) being configured to provide a plurality of distributed streams of supply fluid laterally across the plenum collectively at a second designated flow rate; and
iii. a third foam-forming zone (426) downstream of the second supply fluid distribution zone (424), the third foam-forming zone configured to receive the air flow at the first designated volume flow rate and the distributed streams of fluid at the second designated volume flow rate to generate foam at an expansion rate according to the first and second volume flow rates.

2. A device as defined in claim 1, wherein the second supply fluid distribution zone (424) includes an array of at least one or more distributors (430) extending laterally across the plenum (408), to distribute the supply fluid across the plenum from a plurality of points spaced along a plurality of radial distribution paths.

3. A device as defined in claim 2, wherein the distributors (430) include a plurality of perforated pipe members, each with an elongate cross section having a major axis substantially aligned with a plenum axis (414).

4. A device as defined in claim 3, wherein the reservoir (432) surrounds the plenum (408), at least in part, and the perforated pipe members are in fluid communication with the reservoir (432) at a plurality of locations spaced circumferentially around the plenum (408).

5. A device as defined in claim 1, wherein the pressurizing portion includes a motorized fan (434).

6. A device as defined in any one of claims 1 to 5 wherein the plenum has a boundary surface (229) with a plurality of first openings, each in fluid communication with a corresponding distributor inlet, at least one valve portion to control supply fluid flow to the distributors, and wherein the valve portion includes a valve ring portion (232) which is concentrically arranged with the boundary surface (229) and provided with a plurality of second openings, each to align with a corresponding first opening in an open position, and a valve actuator for actuating the valve ring portion between open and closed positions.

7. A device as defined in claim 6, wherein the valve actuator includes a motorized transmission (240) to move the valve ring portion relative to the boundary surface.

8. A device as defined in claim 7, wherein the valve ring portion (232) supports a plurality of sealing portions, each configured to align with a corresponding first opening to operatively seal the first opening when the valve ring portion is in the closed position.

9. An aerial foam delivery array to be suspended below an aerial lift, comprising a plurality of devices as defined in any one of claims 1 to 8.

10. A method of forming foam for use in aerial foam delivery from an aerial lift, comprising:
a. providing an array of at least one plenum, each with opposite ends providing an air inlet zone that is open to atmosphere and a foam outlet zone respectively, the foam outlet zone including a mesh screen arranged to receive foam-forming supply fluid and a flow of air, an active pressurizing portion operatively associated with the air inlet zone for pressuring the air flow through the plenum, a reservoir configured to be in operative fluid communication with a supply fluid source for receiving the supply fluid therefrom and to deliver the supply fluid to the plenum;
b. establishing the flow of air through the plenum;
c. supplying the at least one plenum with foam-forming fluid by gravity from the reservoir; and
d. distributing, by gravity, a plurality of streams of the foam-forming supply fluid laterally across a distribution zone in the plenum between the air inlet zone and the foam outlet zone, wherein the streams of foam-forming supply fluid pass through the plenum with the air flow to the foam outlet zone to intermingle with the mesh screen to form foam, for delivery by gravity to a target area.

11. A method as defined in claim 10, wherein the distributing includes providing a series of perforated linear fluid distributors extending laterally across the plenum, and delivering the foam-forming supply fluid to the fluid distributors to form the streams therefrom.

12. A method as defined in claim 10 or claim 11, wherein the array includes a plurality of plenums, with each reservoir of each plenum being in fluid communication directly or indirectly with a corresponding foam-forming fluid supply passage segment associated therewith, further comprising distributing the foam-forming supply fluid from one passage segment to another next along the array by gravity, to deliver the foam-forming supply fluid to each reservoir in the plenum.

13. An aerial foam delivery system, comprising a plurality of modular foam generating devices (50) as defined in any one of claims 1 to 9, each configured to be assembled in a designated one of a number of modular configuration arrangements for operative suspension beneath a vertical lift according to one or more designated factors, the plurality of foam generating devices organized into one or more groups of foam generating devices, each group including one or more of the foam generating devices, each group operable in a designated configuration arrangement to receive a designated fluid substantially by gravity and responsive to a control function for generating foam from the designated fluid or a derivative thereof.

14. A system as defined in claim 13, wherein the designated fluids are the same for the one or more groups.

15. A system as defined in claim 13 or claim 14, wherein the designated fluids for each of the one or more groups includes one or more designated foams and/or liquids, with corresponding forms, constituents, ingredients and/or flow rates.

16. A system as defined in any one of claims 13 to 15, wherein the designated fluid of one group is a foam and the designated fluid of another group is water.

17. A system as defined in any one of claims 13 to 16, wherein the modular configuration arrangements include one or more of a I-, II-, III-, H-, U-, V-, C-, X-, and O- shaped configuration arrangement in one or rows or levels in one or more dimensions, relative to the vertical lift.

## Patentansprüche

1. Vorrichtung zur Schaumerzeugung, die ein Plenum (408) umfasst, das konfiguriert ist, um an einer Luftseilbahn zur Verwendung bei der Schaumabgabe aus der Luft aufgehängt zu werden, wobei das Plenum (408) Folgendes umfasst:
i. eine erste Lufteinlasszone (422), die zur Atmosphäre hin offen ist und konfiguriert ist, um einen Luftfluss bei einer ersten vorbestimmten Volumenflussrate zu erzeugen, und die erste Lufteinlasszone einen damit betriebsfähig verbundenen aktiven Druckbeaufschlagungsabschnitt zum Beaufschlagen des durch das Plenum fließenden Luftflusses mit Druck umfasst;
ii. eine zweite Versorgungsfluid-Verteilungszone (424), die der ersten Lufteinlasszone (422) nachgeschaltet ist, und die zweite Versorgungsfluid-Verteilungszone ein Reservoir (432) einschließt, das konfiguriert ist, um in betriebsfähiger Fluidkommunikation mit einer Versorgungsfluidquelle zu stehen, um das Versorgungsfluid von dort durch Schwerkraft aufzunehmen und das Versorgungsfluid durch Schwerkraft an das Plenum abzugeben, und die zweite Versorgungsfluid-Verteilungszone (424) konfiguriert ist, um eine Vielzahl von verteilten Strömen von Versorgungsfluid seitlich über das Plenum hinweg gemeinsam bei einer zweiten vorbestimmten Flussrate bereitzustellen; und
iii. eine dritte schaumbildende Zone (426), die der zweiten Versorgungsfluid-Verteilungszone (424) nachgeschaltet ist, und die dritte schaumbildende Zone konfiguriert ist, um den Luftfluss bei der ersten vorbestimmten Volumenflussrate und die verteilten Ströme von Fluid bei der zweiten vorbestimmten Volumenflussrate aufzunehmen, um Schaum bei einer Ausdehnungsrate gemäß der ersten und zweiten Volumenflussrate zu erzeugen.

2. Vorrichtung wie in Anspruch 1 definiert, wobei die zweite Versorgungsfluid-Verteilungszone (424) eine Anordnung von mindestens einem oder mehreren Verteilern (430) einschließt, die sich seitlich über das Plenum (408) erstrecken, um das Versorgungsfluid über das Plenum von einer Vielzahl von Punkten aus zu verteilen, die entlang einer Vielzahl von radialen Verteilerpfaden beabstandet sind.

3. Vorrichtung wie in Anspruch 2 definiert, wobei die Verteiler (430) eine Vielzahl von perforierten Rohrelementen einschließen, jedes mit einem länglichen Querschnitt, der eine Hauptachse aufweist, die im Wesentlichen mit einer Plenumachse (414) ausgerichtet ist.

4. Vorrichtung wie in Anspruch 3 definiert, wobei das Reservoir (432) das Plenum (408) mindestens teilweise umgibt und die perforierten Rohrelemente an einer Vielzahl von Stellen, die in Umfangsrichtung um das Plenum (408) herum beabstandet sind, in Fluidkommunikation mit dem Reservoir (432) stehen.

5. Vorrichtung wie in Anspruch 1 definiert, wobei der Druckbeaufschlagungsabschnitt einen motorisierten Ventilator (434) einschließt.

6. Vorrichtung wie in einem der Ansprüche 1 bis 5 definiert, wobei das Plenum eine Grenzfläche (229) mit einer Vielzahl von ersten Öffnungen, die jeweils in Fluidkommunikation mit einem entsprechenden Verteilereinlass stehen, mindestens einen Ventilabschnitt zur Steuerung des Versorgungsfluidflusses zu den Verteilern aufweist, und wobei der Ventilabschnitt einen Ventilringabschnitt (232) einschließt, der konzentrisch zu der Grenzfläche (229) eingerichtet ist und mit einer Vielzahl von zweiten Öffnungen bereitgestellt ist, die jeweils mit einer entsprechenden ersten Öffnung in einer offenen Position ausgerichtet sind, und ein Ventilstellglied zum Betätigen des Ventilringabschnitts zwischen der offenen und der geschlossenen Position.

7. Vorrichtung wie in Anspruch 6 definiert, wobei das Ventilstellglied ein motorisiertes Getriebe (240) einschließt, um den Ventilringabschnitt relativ zur Grenzfläche zu bewegen.

8. Vorrichtung wie in Anspruch 7 definiert, wobei der Ventilringabschnitt (232) eine Vielzahl von Dichtungsabschnitten trägt, die jeweils konfiguriert sind, um mit einer entsprechenden ersten Öffnung ausgerichtet zu sein, um die erste Öffnung betriebsfähig abzudichten, wenn sich der Ventilringabschnitt in der geschlossenen Position befindet.

9. Anordnung zur Schaumabgabe aus der Luft, die unter einer Luftseilbahn aufzuhängen ist und eine Vielzahl von Vorrichtungen, wie in einem der Ansprüche 1 bis 8 definiert, umfasst.

10. Verfahren zur Schaumbildung zur Verwendung bei der Schaumabgabe aus der Luft, das Folgendes umfasst:
a. Bereitstellen einer Anordnung von mindestens einem Plenum, jedes mit gegenüberliegenden Enden, die jeweils eine Lufteinlasszone, die zur Atmosphäre hin offen ist, und eine Schaumauslasszone bereitstellen, und die Schaumauslasszone einschließlich eines Maschensiebs angeordnet ist, um ein schaumbildendes Versorgungsfluid und einen Luftfluss aufzunehmen, einen aktiven Druckbeaufschlagungsabschnitt, der betriebsfähig mit der Lufteinlasszone verbunden ist, um den durch das Plenum fließenden Luftfluss mit Druck zu beaufschlagen, ein Reservoir, das konfiguriert ist, um in betriebsfähiger Fluidkommunikation mit einer Versorgungsfluidquelle zu stehen, um das Versorgungsfluid von dieser aufzunehmen und das Versorgungsfluid an das Plenum zu abzugeben;
b. Herstellen des durch das Plenum fließenden Luftflusses;
c. Versorgen des mindestens einen Plenums mit schaumbildendem Fluid durch Schwerkraft aus dem Reservoir; und
d. Verteilen einer Vielzahl von Strömen des schaumbildenden Versorgungsfluids durch Schwerkraft seitlich über eine Verteilungszone im Plenum zwischen der Lufteinlasszone und der Schaumauslasszone, wobei die Ströme des schaumbildenden Versorgungsfluids mit dem Luftfluss durch das Plenum zur Schaumauslasszone hindurchgehen, um sich mit dem Maschensieb zu vermischen und Schaum zu bilden, der durch Schwerkraft an einen Zielbereich abgegeben wird.

11. Verfahren wie in Anspruch 10 definiert, wobei das Verteilen das Bereitstellen einer Reihe von perforierten linearen Fluidverteilern, die sich seitlich über das Plenum erstrecken, und das Abgeben des schaumbildenden Versorgungsfluids an die Fluidverteiler einschließt, um daraus die Ströme zu bilden.

12. Verfahren wie in Anspruch 10 oder 11 definiert, wobei die Anordnung eine Vielzahl von Plenen umfasst und jedes Reservoir jedes Plenums in direkter oder indirekter Fluidkommunikation mit einem entsprechenden, damit verbundenen, schaumbildenden Fluidversorgungs-Durchgangssegment steht, ferner das Verteilen des schaumbildenden Versorgungsfluids von einem Durchgangssegment zu einem anderen entlang der Anordnung durch Schwerkraft umfasst, um das schaumbildende Versorgungsfluid an jedes Reservoir im Plenum abzugeben.

13. System zur Schaumabgabe aus der Luft, das eine Vielzahl von modularen schaumerzeugenden Vorrichtungen (50) umfasst, wie in jedem beliebigen der Ansprüche 1 bis 9 definiert, und jede davon konfiguriert ist, um in einer vorbestimmten aus einer Anzahl von modularen Konfigurationseinrichtungen für eine betriebsfähige Aufhängung unter einem vertikalen Aufzug gemäß einem oder mehreren vorbestimmten Faktoren zusammengebaut zu werden, und die Vielzahl von schaumerzeugenden Vorrichtungen in einer oder mehreren Gruppen von schaumerzeugenden Vorrichtungen organisiert sind, und jede Gruppe eine oder mehrere der schaumerzeugenden Vorrichtungen einschließt, und jede Gruppe in einer vorbestimmten Konfigurationseinrichtung betrieben werden kann, um ein vorbestimmtes Fluid im Wesentlichen durch Schwerkraft aufzunehmen, und auf eine Steuerungsfunktion anspricht, um Schaum aus dem vorbestimmten Fluid oder einem Derivat davon zu erzeugen.

14. System wie in Anspruch 13 definiert, wobei die vorbestimmten Fluide für eine oder mehrere Gruppen gleich sind.

15. System wie in Anspruch 13 oder 14 definiert, wobei die vorbestimmten Fluide für jede der einen oder mehreren Gruppen einen oder mehrere vorbestimmte Schäume und/oder Flüssigkeiten einschließen, mit entsprechenden Formen, Bestandteilen, Zutaten und/oder Flussraten.

16. System wie in einem der Ansprüche 13 bis 15 definiert, wobei das vorbestimmte Fluid einer Gruppe ein Schaum und das vorbestimmte Fluid einer anderen Gruppe Wasser ist.

17. System wie in einem der Ansprüche 13 bis 16 definiert, wobei die modularen Konfigurationseinrichtungen eine oder mehrere I-, II-, III-, H-, U-, V-, C-, X- und O-förmige Konfigurationseinrichtungen in Einem oder in Reihen oder Ebenen in einer oder mehreren Abmessungen bezogen auf den vertikalen Aufzug einschließen.

## Revendications

1. Dispositif de génération de mousse, comprenant un plénum (408) configuré pour être suspendu à une nacelle aérienne pour une utilisation dans la délivrance aérienne de mousse, le plénum (408) comprenant :
i. une première zone d'entrée d'air (422) ouverte à l'atmosphère et configurée pour générer un flux d'air à un premier débit volumique désigné, la première zone d'entrée d'air incluant une partie active de pressurisation fonctionnellement associée à celle-ci pour pressuriser le flux d'air à travers le plénum ;
ii. une deuxième zone de distribution de fluide d'alimentation (424) en aval de la première zone d'entrée d'air (422), la deuxième zone de distribution de fluide d'alimentation incluant un réservoir (432) configuré pour être en communication fluidique fonctionnelle avec une source de fluide d'alimentation pour recevoir le fluide d'alimentation par gravité à partir de celle-ci et pour délivrer le fluide d'alimentation au plénum par gravité, la deuxième zone de distribution de fluide d'alimentation (424) étant configurée pour fournir une pluralité de flux distribués de fluide d'alimentation latéralement à travers le plénum collectivement à un deuxième débit désigné ; et
iii. une troisième zone de formation de mousse (426) en aval de la deuxième zone de distribution de fluide d'alimentation (424), la troisième zone de formation de mousse étant configurée pour recevoir le flux d'air au premier débit volumique désigné et les flux de fluide distribués au deuxième débit volumique désigné pour générer de la mousse à un taux d'expansion en fonction des premier et deuxième débits volumiques.

2. Dispositif tel que défini dans la revendication 1, dans lequel la deuxième zone de distribution de fluide d'alimentation (424) inclut un agencement d'au moins un ou plusieurs distributeurs (430) s'étendant latéralement à travers le plénum (408), pour distribuer le fluide d'alimentation à travers le plénum à partir d'une pluralité de points espacés le long d'une pluralité de chemins de distribution radiaux.

3. Dispositif tel que défini dans la revendication 2, dans lequel les distributeurs (430) incluent une pluralité d'éléments de tuyaux perforés, chacun avec une section transversale allongée présentant un axe majeur essentiellement aligné avec un axe (414) du plénum.

4. Dispositif tel que défini dans la revendication 3, dans lequel le réservoir (432) entoure le plénum (408), au moins en partie, et les éléments de tuyau perforés sont en communication fluidique avec le réservoir (432) à une pluralité d'emplacements espacés circonférentiellement autour du plénum (408).

5. Dispositif tel que défini dans la revendication 1, dans lequel la partie de pressurisation inclut un ventilateur motorisé (434).

6. Dispositif tel que défini dans l'une quelconque des revendications 1 à 5, dans lequel le plénum présente une surface limite (229) avec une pluralité de premières ouvertures, chacune en communication fluidique avec une entrée de distributeur correspondante, au moins une partie soupape pour contrôler le flux de fluide d'alimentation vers les distributeurs, et dans lequel la partie soupape inclut une partie anneau de soupape (232) qui est agencée concentriquement avec la surface limite (229) et pourvue d'une pluralité de secondes ouvertures, chacune pour s'aligner avec une première ouverture correspondante dans une position ouverte, et un actionneur de soupape pour actionner la partie anneau de soupape entre les positions ouverte et fermée.

7. Dispositif tel que défini dans la revendication 6, dans lequel l'actionneur de soupape inclut une transmission motorisée (240) pour déplacer la partie anneau de soupape par rapport à la surface limite.

8. Dispositif tel que défini dans la revendication 7, dans lequel la partie anneau de soupape (232) supporte une pluralité de parties d'étanchéité, chacune configurée pour s'aligner avec une première ouverture correspondante pour sceller fonctionnellement la première ouverture lorsque la partie anneau de soupape est en position fermée.

9. Agencement de délivrance aérienne de mousse à suspendre sous une nacelle aérienne, comprenant une pluralité de dispositifs tels que définis dans l'une quelconque des revendications 1 à 8.

10. Procédé de formation de mousse à utiliser dans la délivrance aérienne de mousse à partir d'une nacelle aérienne, comprenant :
a. la fourniture d'un agencement d'au moins un plénum, chacun avec des extrémités opposées fournissant respectivement une zone d'entrée d'air qui est ouverte à l'atmosphère et une zone de sortie de mousse, la zone de sortie de mousse incluant un tamis agencé pour recevoir un fluide d'alimentation formant de la mousse et un flux d'air, une partie de pressurisation active fonctionnellement associée à la zone d'entrée d'air pour presser le flux d'air à travers le plénum, un réservoir configuré pour être en communication fluidique fonctionnelle avec une source de fluide d'alimentation pour recevoir le fluide d'alimentation à partir de celle-ci et pour fournir le fluide d'alimentation au plénum ;
b. l'établissement du flux d'air à travers le plénum ;
c. l'alimentation de l'au moins un plénum en fluide formant de la mousse par gravité à partir du réservoir ; et
d. la distribution, par gravité, d'une pluralité de flux de fluide d'alimentation formant de la mousse, latéralement à travers une zone de distribution dans le plénum entre la zone d'entrée d'air et la zone de sortie de mousse, dans lequel les flux de fluide d'alimentation formant de la mousse passent à travers le plénum avec le flux d'air jusqu'à la zone de sortie de mousse pour s'entremêler avec le tamis pour former de la mousse, pour l'acheminement par gravité vers une zone cible.

11. Procédé tel que défini dans la revendication 10, dans lequel la distribution inclut une série de distributeurs de fluide linéaires perforés s'étendant latéralement à travers le plénum, et délivrant le fluide d'alimentation formant de la mousse aux distributeurs de fluide pour former les flux à partir de ceux-ci.

12. Procédé tel que défini dans la revendication 10 ou la revendication 11, dans lequel l'agencement inclut une pluralité de plénums, chaque réservoir de chaque plénum étant en communication fluidique directement ou indirectement avec un segment de passage d'alimentation en fluide formant de la mousse correspondant associé à celui-ci, comprenant en outre la distribution du fluide d'alimentation formant de la mousse d'un segment de passage à l'autre le long de l'agencement par gravité, pour délivrer le fluide d'alimentation formant de la mousse à chaque réservoir dans le plénum.

13. Système de délivrance aérienne de mousse, comprenant une pluralité de dispositifs modulaires de génération de mousse (50) tels que définis dans l'une quelconque des revendications 1 à 9, chacun configuré pour être assemblé dans une configuration désignée parmi un certain nombre de configurations modulaires pour une suspension fonctionnelle sous un élévateur vertical selon un ou plusieurs facteurs désignés, la pluralité de dispositifs de génération de mousse organisés en un ou plusieurs groupes de dispositifs de génération de mousse, chaque groupe incluant un ou plusieurs dispositifs de génération de mousse, chaque groupe pouvant fonctionner dans un agencement de configuration désigné pour recevoir un fluide désigné essentiellement par gravité et répondant à une fonction de commande pour générer de la mousse à partir du fluide désigné ou d'un dérivé de celui-ci.

14. Système tel que défini dans la revendication 13, dans lequel les fluides désignés sont les mêmes pour les un ou plusieurs groupes.

15. Système tel que défini dans la revendication 13 ou la revendication 14, dans lequel les fluides désignés pour chacun des un ou plusieurs groupes incluent une ou plusieurs mousses et/ou liquides désignés, avec des formes, des constituants, des ingrédients et/ou des débits correspondants.

16. Système tel que défini dans l'une quelconque des revendications 13 à 15, dans lequel le fluide désigné d'un groupe est une mousse et le fluide désigné d'un autre groupe est de l'eau.

17. Système tel que défini dans l'une quelconque des revendications 13 à 16, dans lequel les agencements de configuration modulaire incluent un ou plusieurs agencements de configuration en forme de I-, II-, III-, H-, U-, V-, C-, X-, et O dans une ou plusieurs rangées ou niveaux dans une ou plusieurs dimensions, par rapport à l'élévateur vertical.
